(19) Europäisches Patentamt
European Patent Office
Office européen des brevets

(11) EP 3 192 078 B1

(12) # FASCICULE DE BREVET EUROPEEN

(45) Date de publication et mention de la délivrance du brevet:
**05.09.2018 Bulletin 2018/36**

(21) Numéro de dépôt: **15763312.4**

(22) Date de dépôt: **11.09.2015**

(51) Int Cl.:
***G21F 9/12*** (2006.01) ***B01J 39/16*** (2017.01)
***B01J 20/02*** (2006.01) ***B01J 20/06*** (2006.01)
***B01J 20/30*** (2006.01) ***B01D 67/00*** (2006.01)
***B01D 71/02*** (2006.01) ***G21F 9/30*** (2006.01)
***B22F 1/00*** (2006.01) ***B82Y 40/00*** (2011.01)
***C03C 3/06*** (2006.01) ***C03C 3/078*** (2006.01)
***B01J 39/17*** (2017.01) ***B82Y 30/00*** (2011.01)

(86) Numéro de dépôt international:
**PCT/EP2015/070884**

(87) Numéro de publication internationale:
**WO 2016/038206 (17.03.2016 Gazette 2016/11)**

(54) **PROCEDE DE PREPARATION D'UN MATERIAU SOLIDE NANOCOMPOSITE A BASE D'HEXA- ET OCTACYANOMETALLATES DE METAUX ALCALINS**

VERFAHREN ZUR HERSTELLUNG EINES FESTSTOFFES IN FORM EINES NANOCOMPOSIT-MATERIALES AUF DER BASIS VON HEXA- UND OCTACYANOMETALLATEN VON ALKALIMETALLEN

PROCESS FOR THE PREPARATION OF A SOLID NANOCOMPOSITE MATERIAL ON THE BASIS OF HEXA- AND OCTACYANOMETALATES OF AKALIMETALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2014 FR 1458594**

(43) Date de publication de la demande:
**19.07.2017 Bulletin 2017/29**

(73) Titulaire: **Commissariat à l'Énergie Atomique et aux Énergies Alternatives
75015 Paris (FR)**

(72) Inventeurs:
- **GRANDJEAN, Agnès
F-30330 Saint-Marcel-de-Careiret (FR)**
- **BARRE, Yves
F-84100 Uchaux (FR)**

(74) Mandataire: **Brevalex
56, Boulevard de l'Embouchure
B.P. 27519
31075 Toulouse Cedex 2 (FR)**

(56) Documents cités:
**WO-A1-2014/049048 WO-A2-2010/133689**

- **FOLCH B ET AL: "synthesis and behaviour of size controlled cyano-bridged coordination polymer nanoparticles with hybrid mesoporous silica", NEW JOURNAL OF CHEMISTRY, ROYAL SOCIETY OF CHEMISTRY, GB, vol. 32, 1 février 2008 (2008-02-01), pages 273-282, XP008119516, ISSN: 1144-0546, DOI: 10.1039/B709490F [extrait le 2007-11-12]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

### DOMAINE TECHNIQUE

L'invention concerne un matériau solide nanocomposite à base d'hexa- et octacyanométallates de métaux alcalins.

Plus précisément, l'invention a trait à un matériau solide nanocomposite comprenant des nanoparticules d'un polymère de coordination métallique à ligands CN comprenant des cations métalliques, des cations alcalins, et des anions hexa- et octacyanométallates, notamment des anions hexa- et octacyanoferrates, lesdites nanoparticules étant liées par une liaison organométallique à un greffon organique fixé chimiquement à l'intérieur des pores d'un support solide, notamment d'un support solide inorganique.

En d'autres termes, l'invention a trait à un procédé de fonctionnalisation d'un support solide par des nanoparticules d'analogues de Bleu de Prusse.

Le matériau préparé par le procédé selon l'invention peut notamment être utilisé pour la fixation de polluants minéraux contenus dans un liquide tel qu'une solution.

En particulier, le matériau préparé par le procédé selon l'invention peut être utilisé pour la fixation de cations métalliques, notamment radioactifs contenus dans un liquide.

Par exemple, le matériau préparé par le procédé selon l'invention peut être utilisé pour l'adsorption sélective du Césium radioactif contenu dans un liquide.

Le domaine technique de l'invention peut de manière générale être défini comme celui des fixateurs minéraux.

### ÉTAT DE LA TECHNIQUE ANTÉRIEURE

Les installations nucléaires telles que les réacteurs de puissance, les usines de retraitement du combustible nucléaire usé, les laboratoires, les centres de recherche, et les stations de traitement des effluents liquides, génèrent des effluents radioactifs.

Ces effluents, dont les volumes sont considérables, doivent être traités et décontaminés avant leur rejet dans l'environnement.

Les polluants que contiennent ces effluents et qui doivent donc être éliminés, sont principalement des particules solides et des radio-éléments essentiellement présents sous la forme de cations métalliques en solution.

L'extraction, fixation sélective des radio-éléments présents dans ces effluents tels que des solutions est actuellement généralement réalisée avec des résines échangeuses d'ions organiques.

De telles résines présentent au moins deux inconvénients. D'une part leur capacité est limitée, et d'autre part à cause du caractère irradiant des radio-éléments extraits, ces derniers peuvent dans certains cas entraîner une détérioration des résines en conditions de stockage.

C'est notamment pour remédier aux défauts des résines échangeuses d'ions organiques qu'ont été développés les fixateurs minéraux puis les fixateurs composites, en particulier à base d'analogues du Bleu de Prusse . On pourra à cet égard se reporter à l'état de la technique antérieure exposé dans le document WO-A2-2010/133689 [1].

Le document WO-A1-2010/133689 [1] décrit un matériau solide nanocomposite comprenant des nanoparticules d'un polymère de coordination métallique à ligands CN comprenant des cations $M^{n+}$, où M est un métal de transition, et n est 2 ou 3 ; et des anions $[M'(CN)_m]^{x-}$, où M' est un métal de transition, x est 3 ou 4, et m est 6 ou 8 ; lesdits cations $M^{n+}$ du polymère de coordination étant liés par une liaison organométallique à un groupe organique d'un greffon organique fixé chimiquement à l'intérieur des pores d'un support en verre poreux.

Le document WO-A1-2010/133689 [1] a également trait à un procédé de préparation dudit matériau solide nanocomposite, dans lequel on réalise les étapes successives suivantes :

a) on prépare un support en verre poreux ;
b) on réalise la fixation chimique du greffon organique à l'intérieur des pores du support en verre poreux ;
c) on met en contact le support en verre poreux à l'intérieur des pores duquel est fixé le greffon organique avec une solution contenant l'ion $M^{n+}$, puis on lave une ou plusieurs fois et on sèche le support ainsi obtenu ;
d) on met en contact le support en verre poreux obtenu à l'issue de l'étape c) avec une solution d'un complexe de $[M'(CN)_m]^{x-}$, puis on lave une ou plusieurs fois et on sèche le support ainsi obtenu ;
e) on lave une ou plusieurs fois le support en verre poreux obtenu à l'issue de l'étape d), puis on le sèche ;
f) on répète éventuellement les étapes c) à e).

En d'autres termes, ce document décrit un matériau solide contenant des nanoparticules d'analogues de bleu de Prusse et son procédé de préparation.

Le matériau solide nanocomposite de ce document et son procédé de préparation présentent de nombreux inconvénients.

Le support du matériau solide nanocomposite de ce document est limité à un support en verre poreux, plus exactement à un support en verre poreux très spécifique préparé par attaque chimique sélective de la phase boratée d'un verre de borosilicate de sodium massif dont la composition se situe dans la zone de démixtion du diagramme de phase $SiO_2$-$Na_2O$-$B_2O_3$.

Le procédé de préparation décrit dans ce document ne permet que la préparation d'un matériau spécifique comportant un support très spécifique, et ne peut en aucun cas être transposé à la préparation de matériaux comprenant d'autres supports. Le procédé de préparation de ce document n'est donc pas universel.

De plus, dans ce document, du fait du procédé utilisé pour la préparation du matériau, les nanoparticules d'hexacyanométallates, par exemple, d'hexacyanoferrates liés au support ne contiennent pas d'ions alcalins au sein de leur structure.

Or il a été montré, et cela est bien connu de l'homme du métier, que les hexacyanoferrates contenant un métal alcalin dans leur structure avait non seulement de meilleures capacités d'extraction, par exemple du Cs, mais également qu'il n'y avait alors pas de relargage du métal de transition qui rentre dans la structure de l'hexacyanoferrate .

En effet dans le cas des hexacyanoferrates contenant un métal alcalin, l'adsorption du Cs se fait par échange ionique avec le métal alcalin, tel que le potassium, alors que dans le cas de l'utilisation d'hexacyanoferrates sans métal alcalin, l'adsorption du Cs se fait en partie par un échange ionique avec le métal de transition présent dans la structure de l'hexacyanoferrate ce qui conduit donc à un relargage du métal de transition.

Pour des questions de norme de rejet, il est bien préférable d'avoir un relargage de potassium plutôt qu'un relargage d'un métal de transition tel que le Co ou le Ni.

Enfin, le procédé de synthèse décrit dans le document WO-A1-2010/133689 [1] est relativement complexe, et nécessite généralement l'utilisation de solvants organiques, tels que le méthanol, et d'une atmosphère contrôlée.

Ce procédé de synthèse peut donc difficilement être mis en oeuvre à une échelle industrielle.

Le document WO-A1-2014/049048 [2] décrit une membrane supportée comprenant une membrane de filtration poreuse solide inorganique supportée par un support poreux solide inorganique, ladite membrane supportée comprenant des nanoparticules d'un polymère de coordination métallique à ligands CN comprenant des cations $M^{n+}$, où M est un métal de transition, et n est 2 ou 3 ; et des anions $Alk^{+}_{y}[M'(CN)_{m}]^{x-}$, où Alk est un métal alcalin, y est 0, 1, ou 2, M' est un métal de transition, x est 3 ou 4, et m est 6 ou 8 ; lesdits cations $M^{n+}$ du polymère de coordination étant liés par une liaison organométallique ou de coordination à un groupe organique d'un greffon organique fixé chimiquement à la surface de la membrane de filtration, à l'intérieur des pores de la membrane de filtration, et éventuellement à l'intérieur des pores du support.

Le document WO-A1-2014/049048 [2] décrit aussi un procédé de préparation de la dite membrane supportée dans lequel on réalise les étapes successives suivantes :

a) on fournit une membrane supportée comprenant une membrane de filtration poreuse solide inorganique supportée sur un support poreux solide inorganique ;

b) on réalise la fixation chimique du greffon organique à la surface de la membrane de filtration, à l'intérieur des pores de la membrane de filtration, et éventuellement à l'intérieur des pores du support;

c) on met en contact la membrane de filtration poreuse solide inorganique à la surface de laquelle et à l'intérieur des pores de laquelle est fixé le greffon organique et le support poreux solide inorganique à l'intérieur des pores duquel est éventuellement fixé le greffon inorganique avec une solution contenant l'ion $M^{n+}$, puis on lave une ou plusieurs fois la membrane supportée ainsi obtenue ;

d) on met en contact la membrane supportée obtenue à l'issue de l'étape c) avec une solution d'un complexe de $[M'(CN)_{m}]^{x-}$;

e) on lave une ou plusieurs fois la membrane supportée obtenue à l'issue de l'étape d) ;

f) on répète éventuellement les étapes c) à e).

Le complexe de $[M'(CN)_{m}]^{x-}$ répond à la formule suivante : $(Cat)_{x}[M'(CN)_{m}]$ où Cat est un cation choisi parmi les cations de métaux alcalins tels que K ou Na, les ammoniums, les ammoniums quaternaires tels que le tétrabutylammonium (« TBA »), et les phosphoniums tels que le tétraphénylphosphonium (« $PPh_4$ »).

Bien que ce document revendique des nanoparticules comprenant des anions $Alk^{+}_{y}[M'(CN)_{m}]^{x-}$, où Alk est un métal alcalin et y est 0, 1, ou 2 ; il s'est avéré que le procédé de préparation de ce document dans lequel, lors de l'étape d) on met en contact la membrane supportée obtenue à l'issue de l'étape c) avec une solution contenant seulement un complexe de $[M'(CN)_{m}]^{x-}$ tel que $(Cat)_{x}[M'(CN)_{m}]$, par exemple $K_4Fe(CN)_6$, n'était pas reproductible et ne permettait d'obtenir qu'un composé non stoechiométrique répondant par exemple à la formule $K_{2x}Cu_{1-x}[CuFe(CN)_6]$ avec x strictement inférieur à 1. Dans ce cas, il y a un métal, par exemple du Cu dans la cage de la structure du ferrocyanure, et ce dernier participe à l'échange avec le Cs lors de l'étape d'extraction du Cs. Il y a alors un relargage du Cu dans la solution. Ce relargage est d'autant plus grand que x est petit, ce qui est le cas lorsque l'on utilise le procédé de synthèse décrit dans le document WO-A1-2014/049048 [2]. Cela est confirmé par tous les exemples de la littérature.

En outre, ce procédé n'est de nouveau pas universel, car il permet uniquement de préparer spécifiquement une membrane supportée comprenant une membrane de filtration poreuse solide inorganique supportée par un support poreux solide inorganique.

Il existe donc, au regard de ce qui précède, un besoin pour un procédé de préparation d'un matériau solide nanocomposite comprenant des nanoparticules d'un polymère de coordination métallique à ligands CN, lesdites nanoparticules répondant à la formule $[Alk^{+}_{x}]M^{n+}[M'(CN)_{m}]^{z-}$ où Alk est un métal alcalin, x est 1 ou 2, M est un métal de transition, n est 2 ou 3, M' est

un métal de transition, m est 6 ou 8, z est 3 ou 4 ; lesdits cations $M^{n+}$ du polymère de coordination étant liés par une liaison organométallique ou de coordination à un groupe organique d'un greffon organique, ledit greffon organique étant fixé chimiquement par au moins un groupe organique à au moins une surface d'un support solide.

La formule donnée ci-dessus peut être écrite de manière simplifiée : $[Alk_x]M[M'(CN)_m]$ où M est au degré d'oxydation 2 ou 3 et Alk est au degré d'oxydation 1.

Ce procédé doit, en outre, pouvoir être mis en oeuvre avec toutes sortes de supports quelle que soit leur composition et leur forme, et ne doit pas être limité à des supports en verres poreux comme le procédé du document WO-A1-2010/133689 [1].

Ce procédé doit enfin être simple, fiable, reproductible, et posséder de préférence une empreinte environnementale réduite, par exemple en évitant l'utilisation de solvants organiques, et d'atmosphères contrôlées.

Le but de l'invention est de fournir un tel procédé qui réponde entre autres à ce besoin et à ces exigences.

Le but de la présente invention est encore de fournir un tel procédé qui ne présente pas les inconvénients, défauts, limitations et désavantages des procédés de l'art antérieur, tels que les procédés des documents WO-A1-2010/133689 [1] et WO-A1-2014/049048 [2], et qui résolve les problèmes de ces documents.

**EXPOSÉ DE L'INVENTION**

Ce but, et d'autres encore, sont atteints, conformément à l'invention, par un procédé de préparation d'un matériau solide nanocomposite comprenant des nanoparticules d'un polymère de coordination métallique à ligands CN, lesdites nanoparticules répondant à la formule $[Alk^+_x]Mn^+[M'(CN)_m]^{z-}$ où Alk est un métal alcalin, x est 1 ou 2, M est un métal de transition, n est 2 ou 3, M' est un métal de transition, m est 6 ou 8, z est 3 ou 4 ; lesdits cations $M^{n+}$ du polymère de coordination étant liés par une liaison organométallique ou de coordination à un groupe organique R2 d'un greffon organique, et ledit greffon organique étant en outre fixé chimiquement, de préférence par une liaison covalente, à au moins une surface d'un support solide par réaction d'un groupe R1 dudit greffon avec ladite surface; procédé dans lequel on réalise les étapes successives suivantes :

a) on fournit un support solide;
b) on réalise la fixation chimique du greffon organique à la surface du support solide ;
c) on met en contact le support solide à la surface duquel est fixé le greffon organique avec une solution contenant l'ion $M^{n+}$, puis on lave une ou plusieurs fois et on sèche éventuellement le support solide greffé ainsi obtenu ;
d) on met en contact le support solide greffé obtenu à l'issue de l'étape c) avec une solution contenant un complexe ou sel de $[M'(CN)_m]^{z-}$, par exemple un sel de formule $[Alk_z]$ $[M'(CN)_m]$, et un sel d'un métal alcalin Alk, puis on lave une ou plusieurs fois, et on sèche éventuellement le support solide ainsi obtenu;
e) on répète éventuellement les étapes c) à d), de préférence de 1 à 10 fois, de préférence encore de 1 à 4 fois.
f) Si les étapes c) et d) sont les étapes ultimes du procédé, alors lors de l'étape c) on lave une ou plusieurs fois et on sèche, le support solide greffé obtenu, et lors de l'étape d) on lave une ou plusieurs fois et on sèche le support solide ainsi obtenu.

Dans la formule donnée plus haut, $Alk^+$ représente donc un cation monovalent d'un métal alcalin tel que Li, Na, ou K, K étant préféré.

La formule donnée ci-dessus peut être écrite de manière simplifiée : $[Alk_x]M[M'(CN)_m]$ où M est au degré d'oxydation 2 ou 3 et Alk est au degré d'oxydation 1.

Lesdites nanoparticules peuvent aussi être appelées éventuellement « nanocristaux ».

Par « fixé chimiquement », on entend généralement que le greffon est lié, fixé par une liaison covalente à au moins une surface du support, c'est-à-dire à la surface externe du support et éventuellement à l'intérieur des pores du support si celui-ci est poreux.

En effet, dans le cas d'un support poreux, le greffon peut être fixé à l'intérieur des pores.

Par « fixé à l'intérieur des pores », on entend alors généralement « fixé à la surface interne des parois des canaux définissant lesdits pores ».

Le procédé selon l'invention se distingue fondamentalement des procédés de l'art antérieur tels que ceux décrits dans les documents cités plus haut en ce que, lors de l'étape d), on met en contact le support solide greffé obtenu à l'issue de l'étape c) avec une solution contenant un complexe ou sel de $[M'(CN)_m]^{z-}$ (z= 3 ou 4) par exemple un sel de formule $[Alk_z]$ $[M'(CN)_m]$, et en outre un sel d'un métal alcalin Alk, et non pas une solution contenant uniquement un sel ou complexe de $[M'(CN)_m]^{z-}$, par exemple un sel de formule $[Alk_z]$ $[M'(CN)_m]$. Bien évidemment le sel d'un métal alcalin Alk ajouté en plus, est différent, distinct, du complexe ou sel de $[M'(CN)_m]^{z-}$, par exemple du sel de formule $[Alk_z]$ $[M'(CN)_m]$.

Il est à noter que peu importe la nature du sel ou complexe de $[M'(CN)_m]^{z-}$ et la quantité d'alcalin qui est apportée lors de la dissolution du sel de $[M'(CN)_m]^{z-}$ (sel de cyanate) en solution. En effet, c'est le fait, selon l'invention, d'ajouter un sel d'un métal alcalin en plus du complexe ou sel de cyanate -que ce dernier soit ou non un complexe ou sel de métal alcalin- qui fait qu'on obtient la structure souhaitée selon l'invention telle que décrite plus haut.

L'addition d'un sel d'un métal alcalin lors de cette étape d), n'est ni décrite ni suggérée dans l'art antérieur.

Grâce à l'addition d'un sel de métal alcalin lors de cette étape du procédé selon l'invention, il est possible d'obtenir de manière fiable, certaine, et reproductible le

composé stoechiométrique tel que défini précédemment : $[Alk^+_x]Mn^+ [M'(CN)_m]^{z-}$, alors que -et cela est unanimement confirmé par la littérature- un composé non stoechiométrique, par exemple de formule $Alk_xM_{1-x}[M^{II}M^{III}(CN)_6]$ ; $Alk_xM_{1-x}$ $[M^{III}M'^{II}(CN)_6]$ ; $Alk_{2x}M_{1-x}$ $[M^{II}M'^{II}(CN)_6]$ ; $Alk_xM_{1-x}[M^{II}M''^{V}(CN)_8]$ avec x strictement inférieur à 1 est obtenu lorsque cette synthèse est réalisée sans addition supplémentaire d'un sel de métal alcalin tel qu'un sel de potassium.

Le procédé selon l'invention ne présente pas les inconvénients, défauts, limitations et désavantages des procédés de l'art antérieur, et il apporte une solution aux problèmes des procédés de l'art antérieur tels que ceux décrits dans les documents cités plus haut.

Le procédé selon l'invention est globalement, dans son ensemble, simple, fait appel à des processus connus et éprouvés, est fiable et parfaitement reproductible. En effet, il permet la préparation d'un produit final dont les caractéristiques, la composition -notamment en ce qui concerne la stoechiométrie en métal alcalin-, et les propriétés, sont parfaitement déterminées et ne subissent pas de variations aléatoires.

Le procédé selon l'invention a un faible impact sur l'environnement, en particulier car il ne met généralement pas en oeuvre des solvants organiques mais seulement de l'eau et qu'il ne fait pas appel à des atmosphères contrôlées.

Le matériau préparé par le procédé selon l'invention contenant un métal alcalin dans sa structure a de meilleures capacités d'extraction, par exemple du Cs. En outre, dans le matériau préparé par le procédé selon l'invention, l'échange ionique lors de l'extraction, par exemple du césium, se produit uniquement avec le potassium, et il n'y a pas de relargage du métal M ou M' qui rentre dans la structure de l'hexacyanoferrate. Il est bien plus avantageux notamment du point de vue du respect des normes de rejet de relarguer un métal alcalin tel que le potassium, plutôt qu'un métal de transition. Avantageusement, $M^{n+}$ peut être $Fe^{2+}$, $Ni^{2+}$, $Fe^{3+}$, $Co^{2+}$, $Cu^{2+}$, ou $Zn^{2+}$. Avantageusement, M' peut être $Fe^{2+}$ ou $Fe^{3+}$ ou $Co^{3+}$, et m est 6 ;

Avantageusement, M' peut être $Mo^{5+}$, et m est 8.

Avantageusement, $[M'(CN)_m]^{z-}$ peut être $[Fe(CN)_6]^{3-}$, $[Fe(CN)_6]^{4-}$, $[Co(CN)_6]^{3-}$, ou $[Mo(CN)_8]^{3-}$.

Avantageusement, les cations $M^{n+}$ peuvent être des cations $Ni^{2+}$, $Cu^{2+}$, $Fe^{2+}$ ou $Fe^{3+}$ et les anions peuvent être des anions $[Fe(CN)_6]^{3-}$ ou $[Fe(CN)_6]^{4-}$.

Avantageusement, les cations peuvent être des cations $Fe^{3+}$ et les anions peuvent être des anions $[Mo(CN)_8]^{3-}$.

Avantageusement, les cations peuvent être des cations $Co^{2+}$ ou $Ni^{2+}$ et les anions peuvent être des anions $[Co(CN)_6]^{3-}$.

De préférence, les nanoparticules répondent à la formule $K[Cu^{II}Fe^{III}(CN)_6]$ ou $K_2[Cu^{II}Fe^{II}(CN)_6]$.

Avantageusement, les nanoparticules peuvent avoir une forme de sphère ou de sphéroïde.

Les nanoparticules ont généralement une taille, telle qu'un diamètre, de 3 nm à 30 nm.

Il est à noter que les nanoparticules du polymère de coordination ont généralement une taille et une forme uniformes dans tout le support.

Le groupe organique R2 que l'on peut décrire comme un groupe fonctionnel d'ancrage des nanoparticules est un groupe apte à former une liaison organométallique ou de coordination avec le cation $M^{n+}$.

Ce groupe organique R2 peut être choisi parmi les groupes azotés, tels que les groupes pyridinyles, les groupes amines, les groupes diamine bidentates tels que les groupes alkylène (par exemple de 1 à 10C) diamine, par exemple le groupe éthylène diamine $-NH-(CH_2)_2-NH_2$, et les groupes amides; les groupes oxygénés, tels que les groupes acétylacétonates, les groupes carboxylates, et les groupes carboxyles; les groupes phosphorés tels que les groupes phosphonates, les groupes phosphates ; et les groupes macrocycliques.

Le groupe organique R1 peut être décrit comme un groupe assurant l'accrochage chimique du greffon, généralement par covalence à la surface du support. Ce groupe est choisi en fonction du support utilisé.

Ce groupe organique R1 peut être choisi parmi les groupes silanes, par exemple trialcoxysilanes de formule $-Si-(OR3)_3$, où R3 est un groupe alkyle de 1 à 6C, tels que le groupe triméthoxysilane et le groupe triéthoxysilane ; les groupes carboxyles ; les groupes carboxylates ; les groupes phosphonates, tels que les groupes dialkyl (1 à 6C) phosphonates par exemple diéthylphosphonate ; les groupes acide phosphoniques ; les groupes alcényles tels que les groupes éthyléniques ; les groupes alcynyles tels que les groupes acétyléniques ; les groupes diènes conjugués.

Dans le cas d'une membrane ou d'un support dont la surface est essentiellement constituée par de la silice, ce groupe assurant l'accrochage covalent du greffon est, par exemple, un groupe SiO lié aux groupes silanols de la surface du support.

Dans le cas d'une membrane ou d'un support dont la surface est essentiellement constituée par des oxydes de type $TiO_2$ ou $ZrO_2$, ce groupe assurant l'accrochage covalent du greffon est, par exemple, un groupe phosphonate lié aux groupes hydroxyles de la surface du support.

Le greffon comprend généralement un groupe de liaison L qui relie les groupes R1 et R2.

Avantageusement, le greffon organique répond donc à la formule R1-L-R2 où L est un groupe de liaison, tel qu'un groupe alkylène $-(CH_2)_p-$ où p est un nombre entier de 1 à 12, de préférence de 2 à 6.

Des greffons organiques préférés sont le $_2(EtO)-(P=O)-(CH_2)_2-NH-(CH_2)_2-NH_2$, ou le 2-aminoéthyl-3-aminopropyl-triméthoxysilane.

Avantageusement, le support comprend, de préférence est constitué par, un matériau choisi parmi les oxydes de métaux, tels que les oxydes de métaux de transition, comme les oxydes de titane, les oxydes de

zirconium par exemple la zircone, les oxydes de niobium, les oxydes de vanadium, les oxydes de chrome, les oxydes de cobalt et les oxydes de molybdène, les oxydes d'aluminium, par exemple l'alumine, les oxydes de gallium, et leurs mélanges ; les oxydes de métalloïdes tels que les oxydes de silicium, par exemple la silice, les oxydes de germanium, les oxydes d'antimoine, et les oxydes d'arsenic, et leurs mélanges; les oxydes mixtes de métaux et/ou de métalloïdes ; les aluminosilicates de métaux ; les silicates de métaux tels que les silicates de zirconium, les silicates d'étain, les silicates de cérium, les composés de type mullite (silicate d'aluminium) et cordiérite (silicate alumineux ferromagnésien), et leurs mélanges; les titanates de métaux tels que la tialite, les titanates de métalloïdes, et leurs mélanges; les carbures de métaux ; les carbures de métalloïdes tels que SiC, et leurs mélanges ; les mélanges d'oxydes de métaux et/ou d'oxydes de métalloïdes ; les verres comme les verres borosilicatés; les carbones comme les graphites, les fullerènes, et les carbones mésoporeux ; et les matériaux composites comprenant deux matériaux ou plus parmi les matériaux précités.

Le support peut se présenter sous une forme choisie parmi les particules telles que les granulés, les billes, les fibres, les tubes comme les nanotubes de carbone, et les plaques ; les membranes ; les feutres ; et les monolithes.

Avantageusement, le support se présente sous la forme d'une poudre constituée par des particules telles que des billes et a une granulométrie de 0,5 mm à 1 mm.

Avantageusement, le support a une surface spécifique BET de 50 à 500 $m^2/g$, de préférence de 100 à 200 $m^2/g$.

En effet, un support avec une grande surface spécifique permet d'optimiser les points d'accrochage du greffon au support et l'insertion des nanoparticules au sein du support.

Avantageusement, la fixation chimique du greffon organique à la surface du support solide est réalisée en mettant en contact le support solide avec une solution du greffon organique, dans un solvant choisi parmi l'eau, les alcools, et leurs mélanges.

De préférence, ladite solution est une solution aqueuse, c'est-à-dire dont le solvant est uniquement constitué par de l'eau.

Avantageusement, la solution contenant l'ion $M^{n+}$ est une solution, dans un solvant choisi parmi l'eau, les alcools et leurs mélanges, d'un ou plusieurs sels contenant l'ion $M^{n+}$.

De préférence, ladite solution est une solution aqueuse, c'est-à-dire dont le solvant est uniquement constitué par de l'eau.

Avantageusement la solution contenant un complexe ou sel de $(M'(CN)_m)^{z-}$ par exemple un sel de formule $[Alk_z]$ $[M'(CN)_m]$, et un sel d'un métal alcalin Alk, est une solution dans un solvant choisi parmi l'eau, les alcools et leurs mélanges.

De préférence, ladite solution est une solution aqueuse, c'est-à-dire dont le solvant est uniquement constitué par de l'eau.

De préférence, les lavages sont réalisés avec de l'eau, notamment de l'eau ultra-pure.

Avantageusement, les étapes c) et d) sont réalisées en mode statique ou mode batch, ou bien en mode dynamique, par exemple dans une même colonne.

Avantageusement, les étapes c) à d) peuvent être répétées de 1 à 10 fois, de préférence de 1 à 4 fois.

En faisant varier le nombre de fois où la succession des étapes c) et d) est répétée, on peut facilement moduler la capacité d'adsorption du matériau préparé par le procédé selon l'invention.

Le procédé selon l'invention va maintenant être décrit plus en détail dans ce qui suit en liaison notamment avec des modes de réalisation particuliers de celui-ci qui font l'objet d'exemples.

## BRÈVE DESCRIPTION DES DESSINS

- La Figure 1 est un graphique qui donne la capacité d'adsorption Q du césium (en mg/g) des deux matériaux préparés dans l'exemple 1 par le procédé selon l'invention en fonction du nombre de cycles d'imprégnation (1 à 4 cycles).

Un cycle d'imprégnation désigne la succession des étapes c) et d) du procédé selon l'invention.

Un premier matériau a été préparé par le procédé selon l'invention en réalisant le cycle d'imprégnation en mode discontinu, « batch » (pour chaque nombre de cycle, barre de droite, en noir).

Un second matériau a été préparé par le procédé selon l'invention en réalisant le cycle d'imprégnation en mode continu, en « colonne » (pour chaque nombre de cycle, barre de gauche, en blanc).

- La Figure 2 est un graphique qui donne la capacité d'adsorption Q (en mg/g) des deux matériaux préparés dans l'exemple 2 par le procédé selon l'invention en fonction du nombre de cycles d'imprégnation (1 à 4 cycles).

Un cycle d'imprégnation désigne la succession des étapes c) et d) du procédé selon l'invention.

Un premier matériau a été préparé par le procédé selon l'invention en réalisant le cycle d'imprégnation en mode discontinu, « batch » (pour chaque nombre de cycle, barre de droite, en noir).

Un second matériau a été préparé par le procédé selon l'invention en réalisant le cycle d'imprégnation en mode continu, en « colonne » (pour chaque nombre de cycle, barre de gauche, en blanc).

- La Figure 3 est un graphique qui donne la capacité d'adsorption Q (en mg/g) en fonction du nombre de

cycles d'imprégnation du matériau préparé dans l'exemple 2 par le procédé selon l'invention en réalisant le cycle d'imprégnation en mode discontinu, « batch », la synthèse ayant été poursuivie jusqu'à 7 cycles.

- La Figure 4 est un diagramme de diffraction des rayons (DRX) du matériau de l'exemple 2, préparé par le procédé selon l'invention en réalisant 5 cycles d'imprégnation en mode discontinu, « batch ».

En ordonnée est porté Lin (counts) et en abscisse est porté 2-Thêta.

- La Figure 5 est un graphique qui montre la cinétique d'extraction du césium à partir du matériau du matériau de l'exemple 2, préparé par le procédé selon l'invention en réalisant 5 cycles d'imprégnation en mode discontinu, « batch ».

En abscisse est porté le temps (en h).

En ordonnée sont portées les concentrations (en meq/L).

Les points ⬢ représentent la concentration en $K^+$($[K^+]$) relargué.

Les points ▼ représentent la concentration en $Cu^{2+}$($[Cu^{2+}]$) relargué.

Les points ▲ représentent la concentration en $Cs^+$($[Cs^+]$) sorbé.

## EXPOSÉ DÉTAILLÉ DE MODES DE RÉALISATION PARTICULIERS.

La première étape du procédé selon l'invention consiste à fournir un support solide.

Il n'existe pas de limitations particulières sur la nature du ou des matériaux qui constitue(nt) ce support solide.

Généralement, ce support est en un ou des matériaux inorganiques, minéraux.

Des matériaux préférés ont été cités plus haut.

Il n'existe aussi aucune limitation sur la structure du support et du matériau qui le constitue.

Ainsi, le support peut être poreux on non poreux.

Précisons tout d'abord que le terme « poreux » tel qu'il est utilisé dans la présente en relation avec le support, signifie que ce support contient des pores ou vides.

En conséquence, la densité de ce support poreux est inférieure à la densité théorique du même support non poreux qui est qualifié de matériau massif.

Les pores peuvent être reliés ou isolés mais dans le support poreux selon l'invention, la majorité des pores sont reliés, en communication. On parle alors de porosité ouverte ou de pores interconnectés mais le procédé selon l'invention peut aussi être mis en oeuvre avec un support poreux dont les pores ne sont pas interconnectés.

Généralement, dans le support selon l'invention, les pores sont des pores percolants qui relient une première surface dudit support à une seconde surface principale dudit support.

Au sens de l'invention, un support est généralement considéré comme poreux lorsque sa densité est au-plus d'environ 95% de sa densité théorique.

La porosité du support peut varier dans de larges limites, elle peut être généralement de 25 à 50%.

La porosité est généralement mesurée par analyse d'adsorption -désorption d'azote ou par prosimètre mercure.

Le support mis en oeuvre dans le procédé selon l'invention peut ne présenter qu'un seul type de porosité, par exemple une microporosité, une mésoporosité ou une macroporosité.

Ou bien, le support mis en oeuvre dans le procédé selon l'invention peut présenter simultanément plusieurs types de porosités choisis par exemple parmi une microporosité (taille des pores, par exemple diamètre, généralement inférieure à 2 nm), une mésoporosité (taille des portes, par exemple diamètre, de 2 à 20 nm), et une macroporosité (taille des pores, par exemple diamètre supérieur à 20 nm, par exemple jusqu'à 100 nm).

La porosité peut être ordonnée, organisée, structurée, par exemple mésostructurée, ou non.

Il n'existe également aucune limitation quant à la taille du support, et la taille du support peut varier entre de larges limites.

Le support peut ainsi être un support de taille nanoscopique, c'est-à-dire d'une taille (définie par la plus grande dimension) de 50 nm à 100 nm, un support microscopique, c'est-à-dire d'une taille de 100 nm à 1 mm, ou un support macroscopique, c'est-à-dire d'une taille supérieure à 1 mm.

Le support peut revêtir toutes sortes de formes déjà décrites plus haut.

Le support peut ainsi se présenter sous la forme de particules telles que des sphères (billes) ou sphéroïdes, des fibres, des tubes notamment dans le cas de nanotubes de carbone, ou des plaques.

Toutefois, afin de permettre l'utilisation du support dans un procédé d'extraction en continu mis en oeuvre notamment dans une colonne, on préfère généralement que le support se présente sous la forme de particules formant une poudre. Et on préfère en outre que cette poudre ait une granulométrie (taille de particules) qui réduise les pertes de charge potentielles. Une granulométrie idéale est de 0,5 mm à 1 mm.

La taille des particules est définie par leur plus grande dimension qui est leur diamètre dans le cas de sphères ou de sphéroïdes.

Une autre forme préférée pour le support et qui permet également de réduire les pertes de charge est la forme de monolithes, généralement d'une taille d'au moins 5 mm contenant des macropores.

Avantageusement, le support a une surface

spécifique BET de 50 à 500 $m^2/g$, de préférence de 100 à 200 $m^2/g$ mesurée par adsorption - désorption d'azote ou porosimètrie mercure.

Généralement, le support est lavé, par exemple à l'eau ultra-pure, une ou plusieurs fois, puis séché par exemple à l'étuve à une température de 120°C pendant 24 heures avent de réaliser les autres étapes du procédé.

Les étapes qui vont maintenant être décrites pour la fixation chimique du greffon organique et la préparation des nanoparticules d'un polymère de coordination à ligands CN liés à ces greffons sur au moins une surface du support solide, sont sensiblement analogues à celles du procédé décrit dans le document de Folch et *al.* [3], dans le document WO-A2-2010/133689 [1], et dans le document WO-A1-2014/049048 [2], à la différence toutefois que dans ces documents, le support poreux utilisé est limité à des supports poreux spécifiques en silice mésoporeuse ou en verre poreux, ou à des supports se présentant spécifiquement sous la forme d'une membrane, et également à la différence que, selon l'invention , lors de l'étape d), on met en contact le support solide greffé obtenu à l'issue de l'étape c) avec une solution contenant un complexe ou sel de $(M'(CN)_m)^{z-}$, par exemple un sel de formule $[Alk_z]$ $[M'(CN)_m]$, et en outre un sel d'un métal alcalin Alk, et non pas avec une solution contenant uniquement un complexe ou sel de $(M'(CN)_m)^{z-}$, par exemple un sel de formule $[Alk_z]$ $[M'(CN)_m]$.

On pourra donc se référer à ces documents pour ce qui concerne notamment les réactifs et conditions opératoires mis en oeuvre dans ces étapes mais aussi pour la description des nanoparticules et de leur attachement à la surface du support par l'intermédiaire du greffon.

On réalise au cours d'une première étape la fixation chimique du greffon organique, aussi appelé complexe organique, à au moins une surface du support solide.

La fixation se fait à la surface externe du support, et si le support est poreux, la fixation se fait aussi à l'intérieur des pores du support, plus exactement à la surface de la paroi interne des pores.

Cette étape peut aussi être appelée étape de fonctionnalisation.

Autrement dit, au cours de cette première étape, on réalise le greffage du greffon organique à au moins une surface du support, c'est-à-dire à au moins une surface externe du support solide et éventuellement à l'intérieur des pores du support si celui-ci est poreux.

Le greffon organique comprend un groupe organique R2, que l'on peut dénommer groupe fonctionnel d'ancrage des nanoparticules.

Un groupe fonctionnel d'ancrage des nanoparticules est un groupe apte à former une liaison organométallique ou de coordination avec le cation $M^{n+}$, autrement dit un groupe capable de complexer le cation $M^{n+}$.

Des exemples de tels groupes organiques ont déjà été cités plus haut.

On peut notamment mentionner les groupes organiques azotés, les groupes organiques oxygénés, et les groupes organiques phosphorés.

Un groupe organique préféré est le groupe bidentate diaminoéthylène (Exemple 1).

Le groupe organique, groupe fonctionnel d'ancrage, peut être lié directement à au moins une surface du support solide mais il est généralement lié, fixé chimiquement généralement par une liaison covalente à au moins une surface du support solide, par réaction d'un groupe d'accrochage R1 dudit greffon avec ladite surface, plus exactement avec des groupes présents sur ladite surface.

Le greffon comprend ainsi un groupe organique, aussi appelé groupe fonctionnel d'ancrage R2, et un groupe R1 assurant l'accrochage covalent du greffon à au moins une surface du support solide.

Généralement, le groupe fonctionnel d'ancrage R2 et le groupe d'accrochage R1 du greffon organique sont reliés par l'intermédiaire d'un bras, groupe de liaison L, tel qu'un groupe alkylène linéaire de 1 à 10 atomes de carbone, de préférence de 2 à 6 atomes de carbone comme un groupe $-(CH_2)_2-$.

Le groupe assurant l'accrochage covalent du greffon peut être choisi parmi les groupes déjà cités plus haut, comme les groupes silanes tels que les groupes trialcoxysilane, par exemple les groupes triéthoxysilane ou triméthoxysilane et les groupes phosphonates tels que les groupes dialkylphosphonate, par exemple diéthylphosphonate.

Les groupes silanes et phosphonates permettent l'accrochage covalent du greffon en réagissant avec les groupes hydroxyles qui se trouvent généralement à la surface du support. La liaison entre d'une part la surface du support, et d'autre part le greffon est alors une liaison -O-Si ou une liaison -O-P.

Dans le cas d'un support solide dont la surface est essentiellement constituée par de la silice, le groupe assurant l'accrochage covalent du greffon réagit avec les groupes silanols de la surface du support.

Dans le cas d'un support dont la surface est essentiellement constituée par des oxydes de titane et/ou de zirconium, l'accrochage se fera préférentiellement à l'aide d'un groupement phosphonate permettant ainsi l'utilisation de solutions aqueuses lors de l'étape de greffage.

Pour obtenir la fixation du greffon à la surface du support solide, on met donc en contact ce support solide avec un composé (par simplification greffon désigne aussi bien ce composé avant fixation que ce composé une fois fixé) comprenant ledit groupe fonctionnel d'ancrage, un groupe d'accrochage capable de se lier chimiquement, généralement par covalence, à la surface du support solide, par réaction avec la surface du support solide, et éventuellement un groupe de liaison L reliant ledit groupe fonctionnel d'ancrage, au groupe d'accrochage.

Comme on l'a déjà vu, ce groupe d'accrochage

peut être choisi par exemple parmi les groupes trialcoxysilane ou les groupes dialkylphosphonate, qui réagissent avec les groupes hydroxyle qui peuvent être présents à la surface du support solide.

Généralement, la mise en contact est réalisée en mettant en contact le support solide avec une solution dudit composé, greffon, comprenant un groupe fonctionnel d'ancrage R2, un groupe d'accrochage R1, et éventuellement un groupe de liaison L dans un solvant.

Ainsi, on peut mettre en contact la membrane et le support membranaire avec une solution de 2-aminoéthyl-3-aminopropyl-trimethoxy-silane, de phosphonate d'amine bidentate, ou avec une solution de $(CH_3O)_3Si(CH_2)_2C_5H_4N$, dans un solvant.

Un solvant préféré dans le cas du phosphonate d'amine bidentate est l'eau distillée ou ultra-pure, un solvant préféré dans le cas de $(CH_3O)_3Si(CH_2)_2C_5H_4N$ est le toluène, et un solvant préféré dans le cas du 2-aminoéthyl-3-aminopropyl-triméthoxy-silane est l'éthanol.

La mise en contact peut être réalisée en mode dynamique, c'est-à-dire que le support solide est mis en contact avec un courant de la solution du composé qui circule en circuit fermé.

Ou bien, la mise en contact peut être réalisée en « mode statique ». Par exemple, le support solide est placé dans un récipient contenant la solution et le solvant est chauffé, et est éventuellement porté à reflux.

La durée de la mise en contact est généralement de 4 à 96 heures, par exemple de 96 heures en « mode dynamique », et de 12 à 48 heures, par exemple de 24 heures en « mode statique ».

Le support solide greffé, fonctionnalisé est ensuite séparé du solvant par exemple par filtration.

A l'issue de la mise en contact, on procède généralement à un rinçage du support solide greffé, par exemple avec de l'eau distillée ou ultra-pure, puis éventuellement avec de l'acétone, par exemple pendant une durée de 1 heure, cette durée est la même, en mode dynamique ou en mode statique.

Le support solide greffé est ensuite séché éventuellement, par exemple à température ambiante pendant une durée de 10 h à 4 jours, par exemple une durée de 3 jours.

A la fin de cette première étape, on obtient donc un support solide fonctionnalisé par des groupes organiques tels que des groupes éthylène diamine.

On procède ensuite dans une deuxième étape à la croissance à la surface du support solide d'un polymère de coordination métallique à ligands CN.

Cette croissance est réalisée en deux étapes successives, éventuellement répétées.

Il s'agit des étapes c) et d) du procédé selon l'invention dont la succession constitue ce que l'on peut appeler un cycle d'imprégnation, ledit cycle étant éventuellement répété.

On commence par mettre en contact le support solide à la surface duquel est fixé le greffon organique, avec une solution contenant l'ion $M^{n+}$, généralement sous la forme d'un sel métallique.

Avantageusement, le solvant de cette solution peut être l'eau.

Le solvant préféré est l'eau ultra-pure.

Le sel de métal contenu dans cette solution est un sel dont le métal est généralement choisi parmi les métaux susceptibles de donner un cyanométallate de ce métal, tel qu'un hexacyanoferrate de ce métal, qui soit insoluble.

Ce métal peut être choisi parmi tous les métaux de transition, par exemple parmi le cuivre, le cobalt, le zinc, le nickel et le fer etc. L'ion $M^{n+}$ pourra donc être choisi parmi les ions $Fe^{2+}$, $Ni^{2+}$, $Fe^{3+}$, $Co^{2+}$, $Cu^{2+}$, et $Zn^{2+}$.

Le sel de métal peut être par exemple un nitrate, un sulfate, un chlorure, un acétate, un tétrafluoroborate, éventuellement hydraté, d'un de ces métaux M.

Par exemple, il peut s'agir de nitrate de cuivre.

La concentration du sel de métal dans la solution est de préférence de 0,01 à 1 mol/L, de préférence encore de 0,01 à 0,05 mol/L.

La quantité de sel utilisée est par ailleurs de préférence environ de 0,1 à 1 mmol/g de support solide traité.

Avantageusement, le solvant de la solution contenant l'ion $M^{n+}$ peut être l'eau.

La mise en contact que l'on peut aussi qualifier d'imprégnation du support solide est effectuée en général à température ambiante, et sa durée est généralement de 4 à 96 heures.

Cette mise en contact peut être réalisée en mode statique aussi appelé mode « batch », de préférence sous agitation, auquel cas sa durée est généralement de 12 à 96 heures, ou bien en mode dynamique aussi appelé mode « colonne », auquel cas sa durée est généralement de 4 à 24 heures.

A l'issue de cette mise en contact, on obtient un support solide dans lequel des cations $M^{n+}$ sont liés par une liaison organométallique ou de coordination aux groupes fonctionnels d'ancrage du greffon.

Ainsi, dans le cas de l'éthylènediamine, une liaison s'établit entre l'un des atomes d'azote et le cation $M^{n+}$, et dans le cas de la pyridine, une liaison s'établit entre l'azote du cycle et le cation $M^{n+}$.

A la fin de la mise en contact, on procède à un lavage du support solide.

En mode statique, on retire généralement le support solide de la solution et on procède au lavage.

En mode dynamique, on ne retire pas le support solide de la solution, mais on réalise le lavage directement.

Le lavage consiste à laver une ou plusieurs fois, par exemple 1 à 3 fois le support solide, de préférence avec le même solvant que le solvant de la solution de $M^{n+}$, tel que l'eau.

Cette opération de lavage permet d'éliminer le sel de métal en excès et d'obtenir un produit stable à la composition parfaitement définie.

On peut alors procéder éventuellement à un séchage qui est possible mais pas nécessaire.

On met ensuite en contact le support solide qui a réagi avec le cation de métal $M^{n+}$ comme décrit ci-dessus, avec une solution d'un complexe (que l'on peut aussi appeler sel) de $(M'(CN)_m)^{z-}$, par exemple une solution de $(Cat)_z[M'(CN)_m]$, de préférence une solution d'un sel de formule $Alk_z[M'(CN)_m]$, de préférence encore une solution d'un sel de formule $K_z[M'(CN)_m]$ ; et en outre d'un sel d'un métal alcalin Alk.

Le métal alcalin peut être choisi parmi Li, Na, et K.

De préférence, Alk est K.

Le sel d'un métal alcalin est différent, distinct, du sel ou complexe de $(M'(CN)_m)^{z-}$ aussi contenu dans la solution.

Le sel d'un métal alcalin peut être choisi par exemple parmi les nitrates, sulfates, et halogénures (chlorures, iodures, fluorures) d'un métal alcalin Alk, tels que le nitrate de potassium.

Avantageusement, le solvant de cette solution peut être l'eau.

Le solvant préféré est l'eau ultra-pure.

La mise en contact que l'on peut aussi qualifier d'imprégnation du support solide est effectuée en général à température ambiante, et sa durée est généralement de 2 à 96 heures.

Cette mise en contact peut être réalisée en mode statique ou mode « batch », de préférence sous agitation, auquel cas sa durée est généralement de 12 à 96 heures, ou bien en mode dynamique, auquel cas sa durée est généralement de 2 à 24 heures.

Le complexe répond généralement à la formule suivante :

$(Cat)_z[M'(CN)_m]$, où M', m, et z ont la signification déjà donnée plus haut, et Cat est un cation monovalent choisi généralement parmi les cations de métaux alcalins Alk tels que K ou Na, le cation ammonium, les ammoniums quaternaires tels que le tétrabutylammonium (« TBA »), et les cations phosphoniums tels que le tétraphénylphosphonium (« $PPh_4$ »). Des complexes préférés sont les complexes de formule $Alk_z[M'(CN)_m]$, de préférence encore Kz $[M'(CN)_m]$, par exemple $K_4Fe(CN)_6$.

D'autres complexes qui peuvent être utilisés, sont les complexes de formule $[N(C_4H_9)_4]_x[M'(CN)_m]$, comme les complexes de formule $[N(C_4H_9)_4]_3[M'(CN)_m]$ tels que $[N(C_4H_9)_4]_3[Fe(CN)_6]$, $[N(C_4H_9)_4]_3[Mo(CN)_8]$, et $[N(C_4H_9)_4]_3[Co(CN)_6]$.

La concentration du complexe dans la solution est généralement de 0,001 à 1 mol/L, de préférence de 0,001 à 0,05 mol/L.

La concentration du sel d'un métal alcalin dans la solution est généralement de 0,001 à 1 mol/L, de préférence de 0,001 à 0,05 mol/L.

Avantageusement, la concentration du complexe et la concentration du sel d'un métal alcalin sont les mêmes.

D'autre part, la solution de sel ou de complexe de $[M'(CN)_m]^{z-}$ mise en oeuvre est généralement préparée de telle sorte que le rapport massique du sel ou du complexe à la quantité du support d'imprégnation constitué par le support solide initial, soit de préférence de 0,1 à 5 mmol/g de support solide.

On obtient ainsi la fixation de la partie anionique $[M'(CN)_m]^{z-}$, par exemple $[Fe(CN)_6]^{4-}$ , du complexe sur les cations $M^{n+}$ et simultanément l'insertion de l'alcalin dans la structure du cristal. Cette fixation se fait par formation de liaisons de type covalente qui sont relativement fortes selon le milieu, et cette fixation est généralement quantitative, c'est-à-dire que tous les cations $M^{n+}$ réagissent. La fixation ne présente donc aucun caractère aléatoire.

L'insertion d'alcalin dans l'ensemble des sites de la structure du cristal est possible grâce d'une part à la présence éventuelle d'alcalin dans le complexe ou sel tel que $Alk_z[M'(CN)_m]$ mais surtout par la présence en outre d'un sel d'un métal alcalin ajouté à la solution d'imprégnation.

C'est pourquoi il est généralement préférable que ce soit le même métal alcalin Alk qui soit présent dans le complexe tel que $Alk_z[M'(CN)_m]$ ainsi que dans le sel de métal alcalin de la solution d'imprégnation.

A la fin de la mise en contact, on procède à un lavage du support solide.

En mode statique, on retire généralement le support solide de la solution et on procède au lavage.

En mode dynamique, on ne retire pas le support solide de la solution, mais on réalise le lavage directement.

Le lavage consiste à laver une ou plusieurs fois, par exemple 1 à 3 fois, la membrane et le support membranaire, de préférence avec le même solvant que le solvant de la solution de complexe, tel que l'eau ultra-pure.

Cette opération de lavage a pour but d'éliminer les complexes de $[M'(CN)_m]^{z-}$ qui n'ont pas été fixés sur les cations $M^{n+}$ et permet d'obtenir un support solide dans lequel il n'existe plus de $[M'(CN)_m]^{z-}$ libre, non lié, pouvant être relargué .

La succession des étapes de mise contact du support solide avec le cation de métal $M^{n+}$ et de lavage (une ou plusieurs fois), puis de mise en contact du support solide avec une solution d'un sel ou d'un complexe de $[M'(CN)_m]^{z-}$, par exemple de $[M'(CN)_m]^{3-}$, et d'un sel d'un métal alcalin, et de lavage (une ou plusieurs fois), peut n'être effectuée qu'une seule fois, ou bien elle peut être répétée, généralement de 1 à 10 fois , par exemple de 1 à 4, 5, 6 ou 7 fois, on peut ainsi parfaitement régler la taille des nanoparticules.

La teneur pondérale en fixateur minéral, c'est-à-dire par exemple en hexacyanoferrate de métal insoluble et de métal alcalin de formule $[Alk^+_x]Mn^+[M'(CN)_m]^{z-}$ est généralement de 1 à 10%, par exemple de 3%, par rapport à la masse du support solide.

Le matériau solide nanocomposite préparé par le procédé selon l'invention, peut être mis en oeuvre notamment, mais non exclusivement, dans un procédé de

fixation d'au moins un polluant minéral par exemple d'un cation métallique contenu dans une solution, dans lequel ladite solution est mise en contact avec ledit matériau solide composite fixant des polluants minéraux.

Les matériaux préparés par le procédé selon l'invention, du fait de leurs excellentes propriétés telles qu'une excellente capacité d'échange, une excellente sélectivité, une vitesse de réaction élevée, conviennent particulièrement à un tel usage.

Cette excellente efficacité est obtenue avec des quantités réduites de fixateur minéral tel que d'hexacyanoferrate insoluble.

De plus, les excellentes propriétés de tenue et de stabilité mécaniques du matériau préparé par le procédé selon l'invention, résultant de sa structure spécifique permettent son conditionnement en colonne et la mise en oeuvre en continu du procédé de fixation, par exemple en lit fluidisé, qui peut ainsi être facilement intégré dans une installation existante, par exemple dans une chaîne ou ligne de traitement comprenant plusieurs étapes.

Les solutions qui peuvent être traitées avec le matériau solide composite fixant des polluants minéraux préparé par le procédé selon l'invention sont très variées, et peuvent même contenir par exemple des agents corrosifs, acides, ou autres, du fait de l'excellente stabilité chimique du matériau selon l'invention.

Le matériau préparé par le procédé selon l'invention est utilisable en particulier sur une très large gamme de pH. Par exemple, on pourra traiter des solutions aqueuses nitriques de concentration allant par exemple de 0,1 à 3M, des solutions acides ou neutres jusqu'à un pH de 10. Le polluant minéral susceptible d'être fixé par le matériau préparé par le procédé selon l'invention peut être tout polluant minéral, c'est-à-dire par exemple tout polluant issu (à base) d'un métal ou d'un isotope, de préférence d'un isotope radioactif, de ce métal, susceptible de se trouver en solution.

Ce polluant est choisi de préférence parmi les complexes anioniques, les colloïdes, les cations et leurs mélanges.

Il s'agit de préférence d'un polluant, tel qu'un cation issu d'un élément choisi parmi Tl, Fe, Cs, Co, Ru, Ag, et les isotopes, en particulier les isotopes radioactifs de ceux-ci, parmi lesquels on peut citer $^{58}Co$, $^{60}Co$, $^{55-59}Fe$, $^{134}Cs$, $^{137}Cs$, $^{103,105,105,107}Ru$. Le cation métallique est en particulier le Césium $Cs^+$ ou le Thallium $Tl^{2+}$.

Le complexe anionique est par exemple $RuO_4^{2-}$.

Une utilisation préférée du matériau préparé par le procédé selon l'invention est la fixation du césium qui contribue à une grande part de l'activité gamma des liquides de l'industrie nucléaire et qui est fixé sélectivement par les hexacyanoferrates.

La concentration du ou des polluant(s) tel(s) que du ou des cation(s) peut varier entre de larges limites : par exemple, elle peut être pour chacun de ceux-ci de 0,1 picogramme à 100 mg/L, de préférence de 0,01 mg/L à 10 μg/L.

La solution à traiter par le matériau préparé par le procédé selon l'invention est de préférence une solution aqueuse, qui peut outre le ou les polluant(s) tel(s) que un ou des cation(s) à fixer, contenir d'autres sels en solution tels que $NaNO_3$ ou $LiNO_3$ ou encore $Al(NO_3)_3$ ou tout autre sel soluble de métal alcalin ou alcalino-terreux à une concentration pouvant atteindre jusqu'à 2 moles/L. La solution peut également contenir, comme indiqué plus haut, des acides, bases, et même des composés organiques.

La solution à traiter peut également être une solution dans un solvant organique pur tel que l'éthanol (alcool absolu), l'acétone ou autre, dans un mélange de ces solvants organiques, ou dans un mélange d'eau et d'un ou de plusieurs de ces solvants organiques miscibles à l'eau.

Le matériau préparé par le procédé selon l'invention présente ainsi l'avantage de pouvoir traiter des solutions qui ne peuvent être traitées avec des résines organiques.

Cette solution peut consister en un liquide de procédé ou en un effluent industriel ou autre qui peut être issu en particulier de l'industrie et des installations nucléaires ou de toute autre activité liée au nucléaire.

Parmi les liquides et effluents divers de l'industrie nucléaire, des installations nucléaires et des activités mettant en oeuvre des radionucléides qui peuvent être traités par matériau préparé par le procédé selon l'invention, on peut citer par exemple les eaux de refroidissement des centrales, et tous les effluents divers entrant en contact avec des radio-isotopes tels que toutes les eaux de lavage, les solutions de régénération de résines etc.

Il est toutefois évident que le matériau préparé par le procédé selon l'invention peut également être mis en oeuvre dans d'autres domaines d'activités, industriels ou autres, non nucléaires.

Ainsi, les hexacyanoferrates fixent sélectivement le thallium et cette propriété pourrait être mise à profit dans l'épuration des effluents de cimenterie pour réduire ou supprimer les rejets et émissions de cet élément qui est un poison violent.

On a vu que le procédé de fixation qui met en oeuvre le matériau préparé par le procédé selon l'invention est de préférence mis en oeuvre en continu, le matériau nanocomposite préparé par le procédé selon l'invention, de préférence sous forme de particules, étant alors conditionné par exemple sous forme de colonne, le matériau formant de préférence un lit fluidisé dont la fluidisation est assurée par la solution à traiter, mais le procédé de fixation peut aussi être mis en oeuvre en discontinu, en mode « batch », la mise en contact du matériau échangeur et de la solution à traiter étant alors réalisée de préférence sous agitation. Le conditionnement en colonne permet de traiter en continu des quantités importantes de solution, avec un fort débit de celles-ci.

Le temps de contact de la solution à traiter avec le matériau préparé par le procédé selon l'invention est variable et peut aller, par exemple, de 1 minute à 1 heure pour un fonctionnement en continu et, par exemple de 10 minutes à 25 heures, de préférence de 10 minutes à 24 heures, pour un fonctionnement en « batch ».

A l'issue du procédé de fixation, les polluants se trouvant dans la solution, tels que des cations, sont immobilisés dans le matériau solide nanocomposite fixateur (échangeur) selon l'invention par sorption, c'est-à-dire par échange ionique ou adsorption au sein des nanoparticules, au sein de la structure des nanoparticules, elles-mêmes liées chimiquement à la surface du support solide.

L'invention va maintenant être décrite en référence aux exemples suivants, donnés à titre illustratif et non limitatif.

## EXEMPLES.

### Exemple 1.

Dans cet exemple, le procédé selon l'invention est mis en oeuvre avec un support qui est un verre poreux et un ligand organique qui est une diamine.

Le support au greffage d'analogue de bleu de Prusse est un verre poreux commercial (TRISPOR®), sous la forme de granulés d'une granulométrie 200-500 µm, d'une taille de pores de 30 nm, et présentant une surface spécifique de l'ordre de 130 $m^2$/g.

Le mode opératoire pour l'insertion de ferrocyanure de Cuivre-Potassium ($K_2Cu(Fe(CN)_6)$) au sein de ce verre poreux est le suivant :

**1. Greffage du ligand, greffon organique : $R1-(CH_2)_p-R2$.**

Le Ligand utilisé pour cette étape (étape b) du procédé selon l'invention) et dans cet exemple est 2-aminoéthyl-3 aminopropyl-triméthoxysilane commercialisé par la société ABCR (mais il existe de nombreux autres fournisseurs).

- Numéro de CAS : 1760-24-03.
- Formule brute: $_3(CH_3O)Si(CH_2)_3NH(CH_2)_2NH_2$.
- Masse Molaire : 222,36g/mol.
- Formule développée :

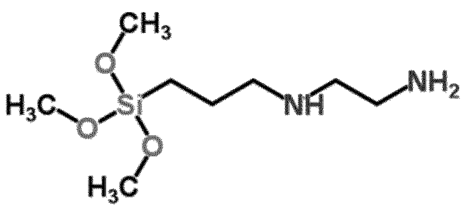

Ici, R1 correspond au triméthoxysilane, alors que R2 correspond au groupement diamine.

Le greffage de ce ligand à fonctions amines à la surface du verre poreux, commence par une étape d'activation qui consiste à chauffer sous vide primaire 10 g de poudre du support dans un ballon de 250 mL à 130°C, pendant 16 à 20 h (une nuit).

Après cette activation, on ajoute dans le ballon 250 mL d'éthanol et 1 mL du ligand. L'ensemble est mis à l'étuve à 60°C pendant 16 à 20h. Puis après filtration, la poudre greffée est lavée à l'eau, puis à l'acétone, et séchée à température ambiante pendant environ 3 jours.

**2. Imprégnation des particules de ferrocyanures au sein du support.**

Cette seconde étape de synthèse a pour objectif de faire croître des particules de ferrocyanures de cuivre au sein du support.

Le greffon précédent est lié au support par les liaisons Si-O-Si.

Lors de cette deuxième étape, on commence lors d'une première réaction par faire réagir le complexe aminé avec un sel de cuivre afin de créer une liaison Cu-N, puis lors d'une seconde réaction on fait réagir le produit de la première réaction avec un sel de ferrocyanure de potassium afin de faire croître le composé ($K_2Cu(Fe(CN)_6)$.

Selon l'invention, pour que la synthèse de ce composé soit reproductible, il est nécessaire d'ajouter également un sel de potassium lors de la seconde réaction. En effet, tous les exemples de la littérature montrent qu'un composé non stoechiométrique $K_2xCu^{II}_{2-x}Fe^{II}(CN)_6$ est obtenu lorsque cette synthèse est réalisée sans addition de sels de potassium.

Deux solutions d'imprégnation S1 et S2 sont nécessaires pour réaliser la première puis la seconde réactions.

La première solution S1, qui permet de réaliser la première réaction contient un sel de cuivre, à savoir $CuNO_3$ à $10^{-2}$ mol/L, et la seconde solution S2, qui permet de réaliser la seconde réaction, contient un mélange de sel de ferrocyanure de potassium, à savoir $K_4Fe(CN)_6$ à $10^{-2}$ mol/L et de sel de potassium, à savoir $KNO_3$ à $10^{-2}$ mol/L.

Un cycle d'imprégnation correspond à la mise en contact, en mode « batch » ou en mode « colonne » du support greffé, tout d'abord avec la solution S1, puis après lavage à l'eau, avec la seconde solution S2.

L' imprégnation a été réalisée soit en mode « batch », c'est-à-dire en mettant en contact 3g de support greffé avec successivement 1L des différentes solutions d'imprégnation S1 et S2, ou en mode « colonne », c'est-à-dire en remplissant une colonne avec 3g de support greffé et en faisant passer successivement 1L de chaque solution d'imprégnation S1 et S2 dans la colonne.

Après chaque cycle, une petite quantité de poudre est prélevée afin de mesurer la capacité d'adsorption du matériau ainsi élaboré. Pour cela, le test de référence se fait à partir d'une solution à 0,1 mmol/L de nitrate de

Cs et 1 mmol/L de nitrate de sodium. 25 mg de matériau est placé dans 50mL de cette solution à base de Cs et Na pendant une vingtaine d'heure. L'analyse de la concentration en Cs se fait dans la solution initiale et dans la solution finale afin d'évaluer la capacité d'adsorption du matériau final. Cette capacité d'adsorption s'exprime ainsi :

$$Q_e = \left([Cs]_i - [Cs]_f\right)\frac{V}{m}$$

où $[Cs]_i$ et $[Cs]_f$ représentent respectivement la concentration en Cs initial et final ; V le volume de solution utilisé et m la masse de matériau utilisé.

La Figure 1 montre les résultats obtenus en termes de capacité d'adsorption du césium avec le matériau préparé comme décrit plus haut par un procédé dans lesquels l'imprégnation a été réalisée en mode « batch », et avec le matériau préparé comme décrit plus haut par un procédé dans lequel l'imprégnation a été réalisée en mode « colonne ».

La capacité d'adsorption du Cs est équivalente pour les matériaux dont l'imprégnation a été réalisée en mode « batch » et en mode « colonne », avec trois cycles d'imprégnation, avec une valeur d'environ 18 mg/g.

La baisse de la capacité d'adsorption pour les matériaux dont l'imprégnation a été réalisée en mode « colonne », au quatrième cycle d'imprégnation, montre toutefois un effet de bouchage de pores que l'on ne retrouve pas chez les matériaux dont l'imprégnation a été réalisée en mode « colonne ».

<u>Exemple 2.</u>

Dans cet exemple, le procédé selon l'invention est mis en oeuvre avec un support qui est un gel de silice commercial déjà pourvu de fonctions amines par greffage d'un ligand.

Ce gel de silice (« *silica gel* ») est disponible auprès de la société Sigma Aldrich® et présente les propriétés suivantes :

- Taille de pore = 60 Å.
- Taille des particules: 40 à 63 μm.
- Surface spécifique : 550 $m^2$/g.
- $[NH_2]$ = 1 mmol/g soit 9%.

Ainsi, seule l'étape d'imprégnation est nécessaire, mais le coût de la synthèse est beaucoup plus important à cause du coût élevé du support.

Le cycle d'imprégnation par le ferrocyanure de cuivre-potassium se fait dans les mêmes conditions que l'exemple 1 soit en mode « batch », soit en mode « colonne ».

Les essais d'extraction du Cs se font également dans les mêmes conditions que pour l'exemple 1.

• **Effet du mode d'imprégnation** : **mode « batch » ou mode « colonne ».**

On a comparé les résultats obtenus en termes de capacité d'adsorption du césium avec le matériau préparé comme décrit plus haut par un procédé dans lesquels l'imprégnation a été réalisée en mode « batch », et avec le matériau préparé comme décrit plus haut par un procédé dans lequel l'imprégnation a été réalisée en mode « colonne ».

La Figure 2 montre les résultats obtenus en termes de capacité d'adsorption du césium avec le matériau préparé comme décrit plus haut par un procédé dans lesquels l'imprégnation a été réalisée en mode « batch », et avec le matériau préparé comme décrit plus haut par un procédé dans lequel l'imprégnation a été réalisé en mode « colonne ».

Comme dans l'exemple 1, la capacité d'adsorption du Cs est équivalente pour les matériaux dont l'imprégnation a été réalisée en mode « batch » et en mode « colonne », avec trois cycles d'imprégnation, avec une valeur d'environ 40 mg/g.

Il apparaît aussi, de la même manière que dans l'exemple 1, que la capacité d'adsorption est bien plus élevée pour les matériaux dont l'imprégnation a été réalisée en mode « batch », après 4 cycles d'imprégnation.

• **Effet du nombre de cycle d'imprégnation.**

La synthèse a été ensuite poursuivie jusqu'à 7 cycles d'imprégnation, en mode « batch ». La Figure 3 montre les résultats obtenus en termes de capacité d'adsorption du césium avec les matériaux ainsi préparés, en fonction du nombre de cycles d'imprégnation.

On observe une variation continue de cette capacité d'adsorption : ceci montre qu'il est possible de moduler facilement la capacité souhaitée au cours de la synthèse du matériau en jouant sur le nombre de cycle d'imprégnation.

Après 7 cycles, cette capacité est très élevée, de l'ordre de 90 mg de Cs adsorbé par g de solide.

• **Caractérisation du matériau**

Le matériau préparé comme décrit plus haut dans cet exemple par un procédé dans lequel l'imprégnation a été réalisée en mode « batch » avec cinq cycles d'imprégnation, a été caractérisé après cinq cycles d'imprégnation, par différentes techniques.

Le diagramme de diffraction des Rayons X présenté sur la figure 4 montre clairement qu'il s'agit de ferrocyanure de cuivre potassium ($K_2Cu(Fe(CN)_6)$) et de silice.

• **Cinétique d'adsorption du Cs**

Enfin, en vue de l'utilisation du matériau de cet exemple en colonne, des essais cinétiques ont été réalisés sur le matériau préparé comme décrit plus haut par un procédé dans lequel l'imprégnation a été réalisée en mode « batch » avec 5 cycles d'imprégnation.

Ces essais cinétiques consistent à mettre en contact 20 mg de matériau avec 50 mL d'effluent, sous agitation, pendant différentes durées.

Chaque point de cinétique correspond à un essai.

C'est-à-dire que pour chaque durée de contact, on fait un essai avec la mise en contact de 20 mg dans 50 mL.

La solution initiale est constituée par de l'eau ultra-pure dans laquelle ont été dissous 100 mg/L de Cs, sous forme de $CsNO_3$. Le Cs dans la solution initiale et les solutions finales après mise en contact sont analysés par chromatographie ionique, tandis que le potassium et le cuivre de ces mêmes solutions sont analysés par ICP-AES (*Ionic Coupled Plasma - Adsorption Energy Spectroscopy,* en anglais)

L'ensemble des résultats des essais cinétiques est présenté sur la figure 5.

Les résultats des essais cinétiques montrent clairement que l'adsorption du Cs dans ce matériau se fait par un échange ionique entre le Cs de la solution et un ion potassium du solide.

Il n'y a aucun relargage de cuivre dans la solution. Le matériau de cet exemple, préparé par le procédé selon l'invention, possède donc des propriétés très intéressantes par rapport à des adsorbants commerciaux qui ne sont pas préparés par le procédé selon l'invention.

**REFERENCES**

[1] WO-A2-2010/133689

[2] WO-A1-2014/049048

[3] B. FOLCH et al., « Synthesis and behaviour of size-controlled cyano-bridged coordination polymer nanoparticles within hybrid mesoporous silica », New J. Chem., 2008, 32, 273-282.

**Revendications**

1. Procédé de préparation d'un matériau solide nanocomposite comprenant des nanoparticules d'un polymère de coordination métallique à ligands CN, lesdites nanoparticules répondant à la formule $[Alk^{+}_{x}]M^{n+}$ $[M'(CN)_m]^{z-}$ où Alk est un métal alcalin tel que Li, Na ou K, x est 1 ou 2, M est un métal de transition, n est 2 ou 3, M' est un métal de transition, m est 6 ou 8, z est 3 ou 4 ; lesdits cations $M^{n+}$ du polymère de coordination étant liés par une liaison organométallique ou de coordination à un groupe organique R2 d'un greffon organique, et ledit greffon organique étant en outre fixé chimiquement, de préférence par une liaison covalente, à au moins une surface d'un support solide par réaction d'un groupe R1 dudit greffon avec ladite surface; procédé dans lequel on réalise les étapes successives suivantes :

   a) on fournit un support solide;
   b) on réalise la fixation chimique du greffon organique à la surface du support solide ;
   c) on met en contact le support solide à la surface duquel est fixé le greffon organique avec une solution contenant l'ion $M^{n+}$, puis on lave une ou plusieurs fois, et on sèche éventuellement le support solide greffé ainsi obtenu ;
   d) on met en contact le support solide greffé obtenu à l'issue de l'étape c) avec une solution contenant un complexe ou sel de $[M'(CN)_m]^{z-}$ par exemple un sel de formule $[Alk_z]$ $[M'(CN)_m]$, et un sel d'un métal alcalin Alk, puis on lave une ou plusieurs fois, et on sèche éventuellement le support solide ainsi obtenu;
   e) on répète éventuellement les étapes c) à d), de préférence de 1 à 10 fois, de préférence encore de 1 à 4 fois.
   f) Si les étapes c) et d) sont les étapes ultimes du procédé, alors lors de l'étape c) on lave une ou plusieurs fois et on sèche, le support solide greffé obtenu, et lors de l'étape d) on lave une ou plusieurs fois et on sèche le support solide ainsi obtenu .

2. Procédé selon la revendication 1, dans lequel $M^{n+}$ est $Fe^{2+}$, $Ni^{2+}$, $Fe^{3+}$, $Co^{2+}$, $Cu^{2+}$, ou $Zn^{2+}$.

3. Procédé selon la revendication 1 ou 2, dans lequel M' est $Fe^{2+}$ ou $Fe^{3+}$ ou $Co^{3+}$, et m est 6 ; ou bien M' est $Mo^{5+}$, et m est 8.

4. Procédé selon l'une quelconque des revendications précédentes, dans lequel $[M'(CN)_m]^{z-}$ est $[Fe(CN)_6]^{3-}$, $[Fe(CN)_6]^{4-}$, $[Co(CN)_6]^{3-}$ ou $[Mo(CN)_8]^{3-}$.

5. Procédé selon l'une quelconque des revendications précédentes, dans lequel les cations $M^{n+}$ sont des cations $Ni^{2+}$, $Cu^{2+}$, $Fe^{2+}$ ou $Fe^{3+}$ et les anions sont des anions $[Fe(CN)_6]^{3-}$ ou $[Fe(CN)_6]^{4-}$; ou les cations sont des cations $Fe^{3+}$ et les anions sont des anions $[Mo(CN)_8]^{3-}$; ou les cations sont des cations $Co^{2+}$ ou $Ni^{2+}$ et les anions sont des anions $[Co(CN)_6]^{3-}$.

6. Procédé selon l'une quelconque des revendications précédentes, dans lequel les nanoparticules répondent à la formule $K[Cu^{II}Fe^{III}(CN)_6]$ ou $K_2[Cu^{II}Fe^{II}(CN)_6]$.

7. Procédé selon l'une quelconque des revendications précédentes, dans lequel les nanoparticules ont une forme de sphère ou de sphéroïde.

**8.** Procédé selon l’une quelconque des revendications précédentes, dans lequel les nanoparticules ont une taille, telle qu’un diamètre, de 3 nm à 30 nm.

**9.** Procédé selon l’une quelconque des revendications précédentes, dans lequel le groupe organique R2 est choisi parmi les groupes azotés, tels que les groupes pyridinyles, les groupes amines, les groupes diamine bidentates tels que les groupes alkylène (par exemple de 1 à 10C) diamine, par exemple le groupe éthylène diamine $-NH-(CH_2)_2-NH_2$, et les groupes amides; les groupes oxygénés, tels que les groupes acétylacétonates, les groupes carboxylates, et les groupes carboxyles; les groupes phosphorés tels que les groupes phosphonates, les groupes phosphates ; et les groupes macrocycliques.

**10.** Procédé selon l’une quelconque des revendications précédentes, dans lequel le groupe organique R1 est choisi parmi les groupes silanes, par exemple trialcoxysilanes de formule $-Si-(OR3)_3$, où R3 est un groupe alkyle de 1 à 6C, tels que le groupe triméthoxysilane et le groupe triéthoxysilane; les groupes carboxyles; les groupes carboxylates ; les groupes phosphonates, tels que les groupes dialkyl (1 à 6C) phosphonates par exemple diéthylphosphonate; les groupes acide phosphoniques ; les groupes alcényles tels que les groupes éthyléniques ; les groupes alcynyles tels que les groupes acétyléniques ; les groupes diènes conjugués.

**11.** Procédé selon l’une quelconque des revendications précédentes, dans lequel le greffon organique répond à la formule R1-L-R2 où L est un groupe de liaison, tel qu’un groupe alkylène $-(CH_2)_p-$ où p est un nombre entier de 1 à 12, de préférence de 2 à 6 ; de préférence le greffon organique est le $_2(EtO)-(P=O)-(CH_2)_2-NH-(CH_2)_2-NH_2$, ou le 2-aminoéthyl-3-aminopropyl-triméthoxysilane.

**12.** Procédé selon l’une quelconque des revendications précédentes, dans lequel le support comprend, de préférence est constitué par, un matériau choisi parmi les oxydes de métaux, tels que les oxydes de métaux de transition, comme les oxydes de titane, les oxydes de zirconium par exemple la zircone, les oxydes de niobium, les oxydes de vanadium, les oxydes de chrome, les oxydes de cobalt et les oxydes de molybdène, les oxydes d’aluminium, par exemple l’alumine, les oxydes de gallium, et leurs mélanges ; les oxydes de métalloïdes tels que les oxydes de silicium, par exemple la silice, les oxydes de germanium, les oxydes d’antimoine, et les oxydes d’arsenic, et leurs mélanges; les oxydes mixtes de métaux et/ou de métalloïdes; les aluminosilicates de métaux; les silicates de métaux tels que les silicates de zirconium, les silicates d’étain, les silicates de cérium, les composés de type mullite (silicate d’aluminium) et cordiérite (silicate alumineux ferromagnésien), et leurs mélanges; les titanates de métaux tels que la tialite, les titanates de métalloïdes, et leurs mélanges; les carbures de métaux; les carbures de métalloïdes tels que SiC, et leurs mélanges; les mélanges d’oxydes de métaux et/ou d’oxydes de métalloïdes ; les verres comme les verres borosilicatés; les carbones comme les graphites, les fullerènes, et les carbones mésoporeux; et les matériaux composites comprenant deux matériaux ou plus parmi les matériaux précités.

**13.** Procédé selon l’une quelconque des revendications précédentes, dans lequel le support se présente sous une forme choisie parmi les particules telles que les granulés, les billes, les fibres, les tubes comme les nanotubes de carbone, et les plaques; les membranes ; les feutres ; et les monolithes ; de préférence le support se présente sous la forme d’une poudre constituée par des particules telles que des billes et a une granulométrie de 0,5 mm à 1 mm.

**14.** Procédé selon l’une quelconque des revendications précédentes, dans lequel le support a une surface spécifique BET de 50 à 500 $m^2/g$, de préférence de 100 à 200 $m^2/g$.

**15.** Procédé selon l’une quelconque des revendications précédentes, dans lequel la fixation chimique du greffon organique à la surface du support solide est réalisée en mettant en contact le support solide avec une solution du greffon organique, dans un solvant choisi parmi l’eau, les alcools, et leurs mélanges.

**16.** Procédé selon l’une quelconque des revendications précédentes, dans lequel la solution contenant l’ion $M^{n+}$ est une solution, dans un solvant choisi parmi l’eau, les alcools et leurs mélanges, d’un ou plusieurs sels contenant l’ion $M^{n+}$.

**17.** Procédé selon l’une quelconque des revendications précédentes, dans lequel la solution contenant un complexe ou sel de $(M'(CN)_m)^{z-}$, par exemple un sel de formule $[Alk_z]$ $[M'(CN)_m]$, et un sel d’un métal alcalin Alk, est une solution dans un solvant choisi parmi l’eau, les alcools et leurs mélanges.

**18.** Procédé selon l’une quelconque des revendications précédentes, dans lequel les étapes c) et d) sont réalisées en mode statique ou mode batch, ou bien en mode dynamique par exemple dans une même colonne.

**Patentansprüche**

**1.** Verfahren zur Herstellung eines festen Nanoverbundmaterials, enthaltend Nanopartikel eines Metallkoordinationspolymers mit CN-Liganden, wobei die Nanopartikel der Formel $[Alk^{+}_{x}]Mn^{+}$ $[M'(CN)_{m}]^{z-}$ entsprechen, worin Alk ein Alkalimetall wie Li, Na oder K ist, x 1 oder 2 ist, M ein Übergangsmetall ist, n 2 oder 3 ist, M' ein Übergangsmetall ist, m 6 oder 8 ist, z 3 oder 4 ist; wobei die $M^{n+}$ Kationen des Koordinationspolymers durch eine metallorganische Bindung oder eine Koordinationsbindung mit einer organischen Gruppe R2 einer organischen Pfropfung gebunden sind, wobei ferner die organische Pfropfung chemisch, vorzugsweise durch eine kovalente Bindung, an zumindest eine Oberfläche eines festen Trägers durch Reaktion einer Gruppe R1 der Pfropfung mit der genannten Oberfläche fixiert ist; wobei bei dem Verfahren die nachstehenden, aufeinanderfolgenden Schritte erfolgen:

a) Bereitstellen eines festen Trägers;
b) Durchführen der chemischen Fixierung der organischen Pfropfung an die Oberfläche des festen Trägers;
c) Inkontaktbringen des festen Trägers, an dessen Oberfläche die organische Pfropfung fixiert ist, mit einer Lösung, die das $M^{n+}$ Ion enthält, dann einmaliges oder mehrmaliges Waschen und gegebenenfalls Trocknen des so erhaltenen, gepfropften festen Trägers;
d) Inkontaktbringen des aus Schritt c) erhaltenen gepfropften festen Trägers mit einer Lösung, die einen Komplex oder ein Salz von $[M'(CN)_{m}]^{z-}$, beispielsweise ein Salz der Formel $[Alk_{z}]$ $[M'(CN)_{m}]$, und ein Salz eines Alkalimetalls Alk enthält, dann einmaliges oder mehrmaliges Waschen und gegebenenfalls Trocknen des so erhaltenen festen Trägers;
e) gegebenenfalls Wiederholen der Schritte c) bis d), bevorzugt 1 bis 10 Mal, noch bevorzugter 1 bis 4 Mal.
f) Falls die Schritte c) und d) die letzten Schritte des Verfahrens sind, dann bei Schritt c) einmaliges oder mehrmaliges Waschen und Trocknen des erhaltenen gepfropften festen Trägers und bei Schritt d) einmaliges oder mehrmaliges Waschen und Trocknen des so erhaltenen festen Trägers.

**2.** Verfahren nach Anspruch 1, wobei $M^{n+}$ $Fe^{2+}$, $Ni^{2+}$, $Fe^{3+}$, $Co^{2+}$, $Cu^{2+}$ oder $Zn^{2+}$ ist.

**3.** Verfahren nach Anspruch 1 oder 2, wobei M' $Fe^{2+}$ oder $Fe^{3+}$ oder $Co^{3+}$ ist und m 6 ist; oder wobei M' $Mo^{5+}$ ist und m 8 ist.

**4.** Verfahren nach einem der vorangehenden Ansprüche, wobei $[M'(CN)_{m}]^{z-}$ $[Fe(CN)_{6}]_{3}^{-}$, $[Fe(CN)_{6}]^{4-}$, $[Co(CN)_{6}]^{3-}$ oder $[Mo(CN)_{8}]^{3-}$ ist.

**5.** Verfahren nach einem der vorangehenden Ansprüche, wobei die $M^{n+}$ Kationen $Ni^{2+}$, $Cu^{2+}$, $Fe^{2+}$ oder $Fe^{3+}$ Kationen sind und die Anionen $[Fe(CN)_{6}]^{3-}$ oder $[Fe(CN)_{6}]^{4-}$ Anionen sind; oder die Kationen $Fe^{3+}$ Kationen sind und die Anionen $[Mo(CN)_{8}]^{3-}$ Anionen sind; oder die Kationen $Co^{2+}$ oder $Ni^{2+}$ Kationen sind und die Anionen $[Co(CN)_{6}]^{3-}$ Anionen sind.

**6.** Verfahren nach einem der vorangehenden Ansprüche, wobei die Nanopartikel der Formel $K[Cu^{II}Fe^{III}(CN)_{6}]$ oder $K_{2}[Cu^{II}Fe^{II}(CN)_{6}]$ entsprechen.

**7.** Verfahren nach einem der vorangehenden Ansprüche, wobei die Nanopartikel eine Kugelform oder eine Sphäroidform haben.

**8.** Verfahren nach einem der vorangehenden Ansprüche, wobei die Nanopartikel eine Größe, wie etwa einen Durchmesser, von 3 nm bis 30 nm haben.

**9.** Verfahren nach einem der vorangehenden Ansprüche, wobei die organische Gruppe R2 ausgewählt ist aus stickstoffhaltigen Gruppen, wie etwa Pyridinylgruppen, Amingruppen, zweizähnigen Diamingruppen, wie etwa Alkylen-(beispielsweise 1 bis 10C)-Diamingruppen, beispielsweise der Ethylendiamin-NH-$(CH_{2})_{2}$-$NH_{2}$-Gruppe, Amidgruppen; sauerstoffhaltigen Gruppen, wie etwa Acetylacetonatgruppen, Carboxylatgruppen, und Carboxylgruppen; phosphorhaltigen Gruppen, wie etwa Phosphonatgruppen, Phosphatgruppen; und makrocyclischen Gruppen.

**10.** Verfahren nach einem der vorangehenden Ansprüche, wobei die organische Gruppe R 1 ausgewählt ist aus Silangruppen, wie beispielsweise Trialkoxysilanen der Formel -Si-$(OR3)_{3}$, worin R3 eine Alkylgruppe mit 1 bis 6C, wie etwa die Trimethoxysilangruppe und die Triethoxysilangruppe ist; Carboxylgruppen; Carboxylatgruppen; Phosphonatgruppen, wie etwa Dialkyl-(1 bis 6C)-Phosphonatgruppen, beispielsweise Diethylphosphonat; Phosphonsäuregruppen; Alkenylgruppen, wie etwa Ethylengruppen; Alkinylgruppen, wie etwa Acetylengruppen; konjugierten Diengruppen.

**11.** Verfahren nach einem der vorangehenden Ansprüche, wobei die organische Pfropfung der Formel R1-L-R2 entspricht, worin L eine Bindungsgruppe, wie etwa eine Alkylen-$(CH_{2})_{p}$- Gruppe, ist, worin p eine ganze Zahl von 1 bis 12, vorzugsweise von 2 bis 6 ist; wobei vorzugsweise die organische Pfropfung $_{2}(EtO)$-(P=O)-$(CH_{2})_{2}$-NH-$(CH_{2})_{2}$-$NH_{2}$ oder 2-Aminoethyl-3-aminopropyl-trimethoxysilan ist.

**12.** Verfahren nach einem der vorangehenden Ansprüche, wobei der Träger ein Material enthält, vorzugsweise daraus besteht, das ausgewählt ist aus Metalloxiden, wie etwa Übergangsmetalloxiden, wie Titanoxiden, Zirkoniumoxiden, beispielsweise Zirkonoxid, Nioboxiden, Vanadiumoxiden, Chromoxiden, Cobaltoxiden und Molybdänoxiden, Aluminiumoxiden, beispielsweise Tonerde, Galliumoxiden und deren Gemischen; Metalloidoxiden, wie etwa Siliciumoxiden, beispielsweise Siliciumdioxid, Germaniumoxiden, Antimonoxiden und Arsenoxiden und deren Gemischen; Mischoxiden aus Metallen und/oder Metalloiden; Aluminosilikaten von Metallen; Silikaten von Metallen, wie etwa Zirkoniumsilikaten, Zinnsilikaten, Cersilikaten, Verbindungen von Typ Mullit (Aluminiumsilikat) und Cordierit (Ferromagnesium-Aluminosilikat) und deren Gemischen; Titanaten von Metallen, wie etwa Tialit, Titanaten von Metalloiden und deren Gemischen; Metallcarbiden, Metalloidcarbiden, wie etwa SiC, und deren Gemischen; Gemischen aus Metalloxiden und/oder Metalloidoxiden; Gläsern, wie Borosilikatgläsern; Kohlenstoffen, wie Graphiten, Fullerenen und mesoporösen Kohlenstoffen; und Verbundmaterialien, die zwei oder mehr der vorgenannten Materialien enthalten.

**13.** Verfahren nach einem der vorangehenden Ansprüche, wobei der Träger in einer Form vorliegt, die ausgewählt ist aus Teilchen, wie Granulaten, Kügelchen, Fasern, Röhrchen, wie Kohlenstoff-Nanoröhrchen, und Platten; Membranen; Filzen; und Monolithen; wobei der Träger vorzugsweise in Form eines Pulvers vorliegt, das aus Teilchen, wie Kügelchen, besteht, und eine Teilchengröße von 0,5 mm bis 1 mm hat.

**14.** Verfahren nach einem der vorangehenden Ansprüche, wobei der Träger eine BET-spezifische Oberfläche von 50 bis 500 $m^2/g$, vorzugsweise von 100 bis 200 $m^2/g$ hat.

**15.** Verfahren nach einem der vorangehenden Ansprüche, wobei die chemische Fixierung der organischen Pfropfung an die Oberfläche des festen Trägers dadurch erfolgt, dass der feste Träger mit einer Lösung der organischen Pfropfung in einem Lösungsmittel, ausgewählt aus Wasser, Alkoholen und deren Gemischen, in Kontakt gebracht wird.

**16.** Verfahren nach einem der vorangehenden Ansprüche, wobei die die das $M^{n+}$-Ion enthaltende Lösung eine Lösung in einem Lösungsmittel, ausgewählt aus Wasser, Alkoholen und deren Gemischen, aus einem oder mehreren Salzen, die das $M^{n+}$ Ion enthalten, ist.

**17.** Verfahren nach einem der vorangehenden Ansprüche, wobei die Lösung, die einen Komplex oder ein Salz von $(M'(CN)_m)^{z-}$, beispielsweise ein Salz der Formel $[Alk_z]$ $[M'(CN)_m]$, und ein Salz eines Alkalimetalls Alk enthält, eine Lösung in einem Lösungsmittel, ausgewählt aus Wasser, Alkoholen und deren Gemischen, ist.

**18.** Verfahren nach einem der vorangehenden Ansprüche, wobei die Schritte c) und d) im statischen Betrieb oder chargenweisen ("batch") Betrieb oder im dynamischen Betrieb beispielsweise in derselben Kolonne ausgeführt werden.

## Claims

**1.** A method for producing a solid nanocomposite material comprising nanoparticles of a metal coordination polymer with CN ligands, said nanoparticles satisfying the formula $[Alk^+_x]Mn^+$ $[M'(CN)_m]^{z-}$wherein Alk is an alkali metal such as Li, Na or K, x is 1 or 2, M is a transition metal, n is 2 or 3, M' is a transition metal, m is 6 or 8, z is 3 or 4; said cations $M^{n+}$ of the coordination polymer being bound through an organometallic or coordination bond to an organic group R2 of an organic graft, and said organic graft being further chemically attached, preferably through a covalent bond, to at least one surface of a solid support by reaction of a group R1 of said graft with said surface; a method wherein the following successive steps are carried out:

a) a solid support is provided;
b) the chemical attachment of the organic graft to the surface of the solid support is achieved;
c) the solid support to the surface of which is attached the organic graft is put into contact with a solution containing the $M^{n+}$ ion and then the thereby obtained grafted solid support is washed one or several times and is optionally dried;
d) the grafted solid support obtained at the end of step c) is put into contact with a solution containing a complex or salt of $[M'(CN)_m]^{z-}$ for example a salt of formula $[Alk_z]$ $[M'(CN)_m]$, and a salt of an alkali metal Alk, and then the thereby obtained solid support is washed once or several times, and is optionally dried;
e) steps c) to d) are optionally repeated, preferably from 1 to 10 times, more preferably from 1 to 4 times.
f) If the steps c) and d) are the ultimate steps of the method, then during step c) the obtained grafted solid support is washed once or several times and is dried, and during step d), the thereby obtained solid support is washed one or several times and dried.

**2.** The method according to claim 1, wherein $M^{n+}$ is $Fe^{2+}$, $Ni^{2+}$, $Fe^{3+}$, $Co^{2+}$, $Cu^{2+}$, or $Zn^{2+}$.

**3.** The method according to claim 1 or 2, wherein M' is

$Fe^{2+}$ or $Fe^{3+}$ or $Co^{3+}$, and m is 6; or else M' is $Mo^{5+}$, and m is 8.

**4.** The method according to any one of the preceding claims, wherein $[M'(CN)_m]^{z-}$ is $[Fe(CN)_6]^{3-}$, $[Fe(CN)_6]^{4-}$, $[Co(CN)_6]^{3-}$ or $[Mo(CN)_8]^{3-}$.

**5.** The method according to any one of the preceding claims, wherein the cations $M^{n+}$ are $Ni^{2+}$, $Cu^{2+}$, $Fe^{2+}$ or $Fe^{3+}$ cations and the anions are $[Fe(CN)_6]^{3-}$ or $[Fe(CN)_6]^{4-}$ anions; or the cations are $Fe^{3+}$ cations and the anions are $[Mo(CN)_8]^{3-}$ anions; or the cations are $Co^{2+}$ or $Ni^{2+}$ cations and the anions are $[Co(CN)_6]^{3-}$ anions.

**6.** The method according to any one of the preceding claims, wherein the nanoparticles fit the formula $K[Cu^{II}Fe^{III}(CN)_6]$ or $K_2[Cu^{II}Fe^{II}(CN)_6]$.

**7.** The method according to any one of the preceding claims, wherein the nanoparticles have the shape of a sphere or a spheroid.

**8.** The method according to any one of the preceding claims, wherein the nanoparticles have a size, such as a diameter, from 3 nm to 30 nm.

**9.** The method according to any one of the preceding claims, wherein the organic group R2 is selected from among nitrogen-containing groups, such as pyridinyl groups, amine groups, diamine bidentate groups such as alkylene (for example 1 to 10C) diamine groups, for example the ethylene diamine $-NH-(CH_2)_2-NH_2$ group, and amide groups; oxygen-containing groups, such as acetylacetonate groups, carboxylate groups, and carboxyl groups; phosphorus-containing groups such as phosphonate groups, phosphate groups; and macrocyclic groups.

**10.** The method according to any one of the preceding claims, wherein the organic group R1 is selected from among silane groups, for example trialkoxysilanes of formula $-Si-(OR3)_3$, wherein R3 is an alkyl group having 1 to 6C, such as the trimethoxysilane group and the triethoxysilane group; carboxyl groups; carboxylate groups; phosphonate groups, such as dialkyl (1 to 6C) phosphonate groups, for example diethylphosphonate; phosphonic acid groups; alkenyl groups such as ethylenic groups; alkynyl groups such as acetylenic groups; conjugate diene groups.

**11.** The method according to any one of the preceding claims, wherein the organic graft fits the formula R1-L-R2 wherein L is a linking group, such as an alkylene group $-(CH_2)_p-$wherein p is an integer from 1 to 12, preferably from 2 to 6; preferably the organic graft is $_2(EtO)-(P=O)-(CH_2)_2-NH-(CH_2)_2-NH_2$, or 2-aminoethyl-3-aminopropyl-trimethoxysilane.

**12.** The method according to any one of the preceding claims, wherein the support comprises, preferably consists of, a material selected from metal oxides, such as transition metal oxides, like titanium oxides, zirconium oxides for example zirconia, niobium oxides, vanadium oxides, chromium oxides, cobalt oxides and molybdenum oxides, aluminium oxides, for example alumina, gallium oxides, and mixtures thereof; metalloid oxides such as silicon oxides, for example silica, germanium oxides, antimony oxides, and arsenic oxides, and mixtures thereof; mixed metal and/or metalloid oxides; metal aluminosilicates; metal silicates such as zirconium silicates, tin silicates, cerium silicates, compounds of the mullite type (aluminium silicate) and cordierite type (magnesium iron aluminium silicate), and mixtures thereof; metal titanates such as tialite, metalloid titanates, and mixtures thereof; metal carbides; metalloid carbides such as SiC, and mixtures thereof; mixtures of metal oxides and/or metalloid oxides; glasses like borosilicate glasses; carbons like graphites, fullerenes, and mesoporous carbons; and composite materials comprising two materials or more from among the aforementioned materials.

**13.** The method according to any one of the preceding claims, wherein the support appears in a form selected from among particles such as granules, beads, fibers, tubes like carbon nanotubes, and plates; membranes; felts; and monoliths; preferably the support appears in the form of a powder consisting of particles such as beads and has a grain size from 0.5 mm to 1 mm.

**14.** The method according to any one of the preceding claims, wherein the support has a BET specific surface area from 50 to 500 $m^2/g$, preferably from 100 to 200 $m^2/g$.

**15.** The method according to any one of the preceding claims, wherein the chemical binding of the organic graft to the surface of the solid support is achieved by putting the solid support in contact with a solution of the organic graft, in a solvent selected from among water, alcohols, and mixtures thereof.

**16.** The method according to any one of the preceding claims, wherein the solution containing the $M^{n+}$ ion is a solution, in a solvent selected from among water, alcohols and mixtures thereof, of one or several salts containing the $M^{n+}$ ion.

**17.** The method according to any one of the preceding claims, wherein the solution containing a complex or salt of $(M'(CN)_m)^{z-}$, for example a salt of formula $[Alk_z]$ $[M'(CN)_m]$, and a salt of an alkali metal Alk, is

a solution in a solvent selected from among water, alcohols and mixtures thereof.

**18.** The method according to any one of the preceding claims, wherein the steps c) and d) are carried out in a static mode or batch mode, or else in a dynamic mode for example in a same column.

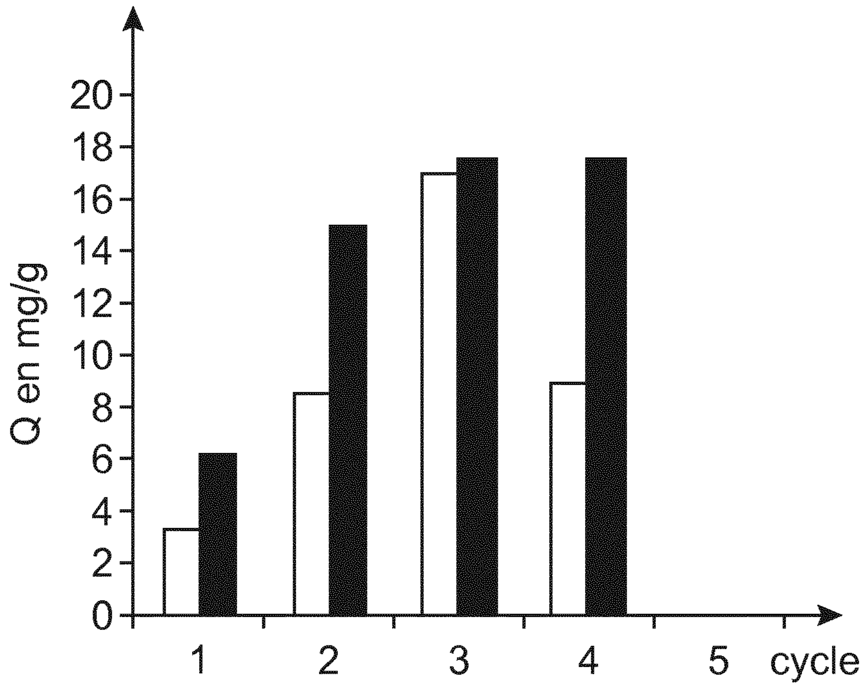
Q en mg/g
20
18
16
14
12
10
8
6
4
2
0
1
2
3
4
5
cycle

FIG.1

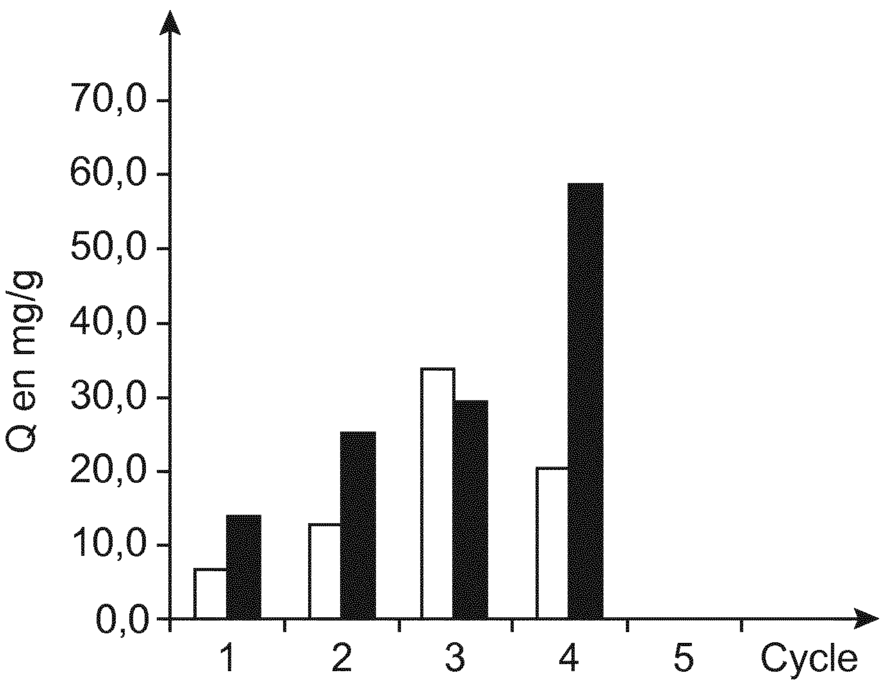
Q en mg/g
70,0
60,0
50,0
40,0
30,0
20,0
10,0
0,0
1
2
3
4
5
Cycle

FIG.2

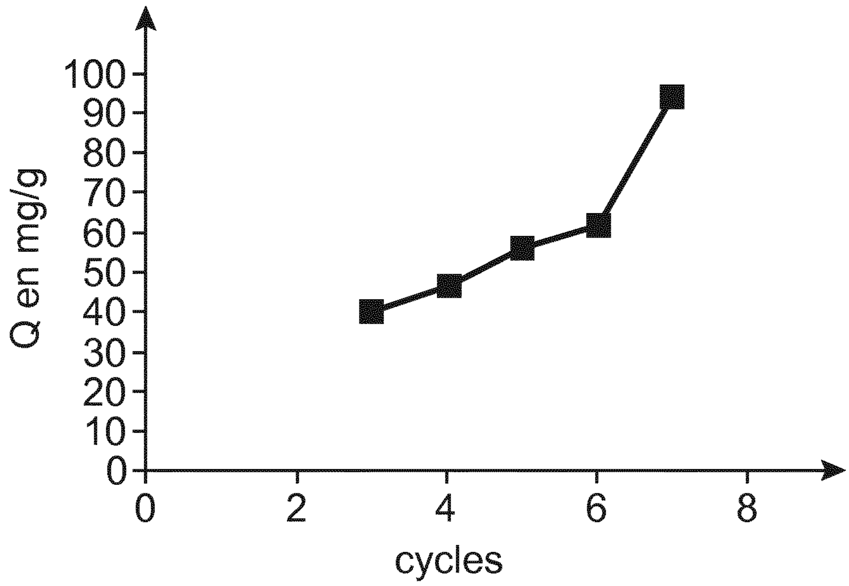
Q en mg/g
100
90
80
70
60
50
40
30
20
10
0
0
2
4
6
8
cycles

FIG.3

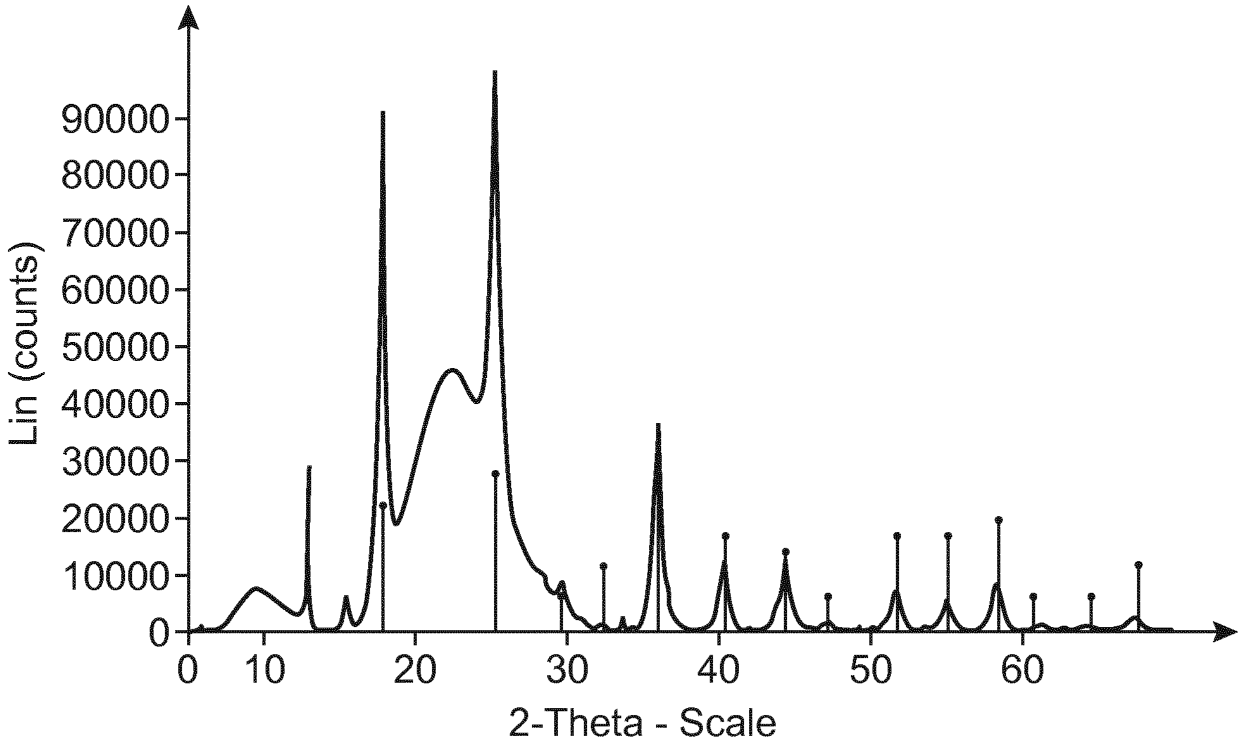
Lin (counts)
90000
80000
70000
60000
50000
40000
30000
20000
10000
0
0
10
20
30
40
50
60
2-Theta - Scale

FIG.4

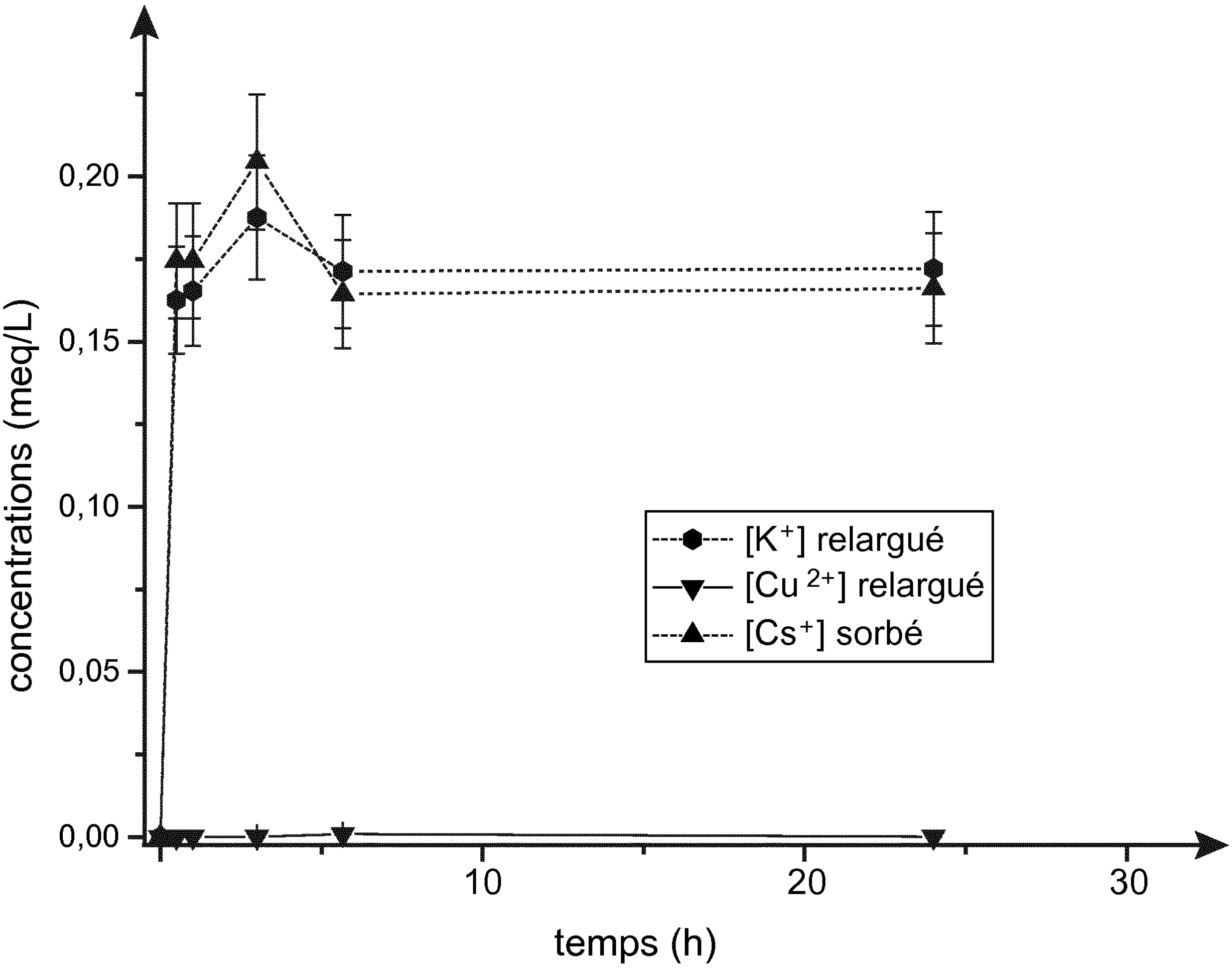
concentrations (meq/L)
0,00
0,05
0,10
0,15
0,20
10
20
30
temps (h)
[K+] relargué
[Cu 2+] relargué
[Cs+] sorbé

FIG.5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2010133689 A2
- WO 2010133689 A1
- WO 2014049048 A1


### Littérature non-brevet citée dans la description


- **B. FOLCH et al.** Synthesis and behaviour of size-controlled cyano-bridged coordination polymer nanoparticles within hybrid mesoporous silica. *New J. Chem.,* 2008, vol. 32, 273-282